# EUROPEAN PATENT SPECIFICATION

(11) **EP 1 888 943 B1**
(45) Date of publication and mention of the grant of the patent: **17.02.2010**
(21) Application number: 06747549.1
(22) Date of filing: 19.05.2006
(51) Int. Cl.: F16H 3/72, F04C 2/107

(54) **TRANSMISSION WITH ORBITAL GEARS**
GETRIEBE MIT PLANETENRÄDERN
TRANSMISSION ORBITALE

(30) Priority: 20.05.2005 NL 1029087
(43) Date of publication of application: 20.02.2008
(73) Proprietor: Mantel, Maria, 3446 BC Woerden (NL)
(72) Inventor: VAN BEEK, Pieter, Erich, NL-3442 HS Woerden (NL)
(74) Representative: Hatzmann, Martin
(86) International application number: PCT/NL2006/000254
(87) International publication number: WO 2006/123927

(56) References cited:
- EP-A- 0 277 861
- EP-A- 0 329 741
- DE-A1- 1 944 562
- US-A- 4 080 115

## Description

The invention relates to a transmission for coupling drive elements, in particular a transmission for coupling a first drive element which is a shaft rotating about its centerline and a second drive element which circularly revolves around that centerline with rotation with respect to its own centerline.

DE1944562 discloses a transmission, comprising a rotary shaft for coupling with a first drive element, provided with a wheel supported eccentrically and freely rotatably on the shaft for coupling with a second drive element, further comprising a ring arranged concentrically and rotatably with respect to the rotary shaft, which ring is provided with a first tread cooperating with the tread of the wheel such that rotation of the rotary shaft results in a corresponding circular revolving movement of the wheel about the centerline of the rotary shaft, while rotation of the wheel about its own axis depends on the rotation of the rotary shaft, and is therefor regarded as constituting the closest prior art.

Such a transmission is, for instance, used for driving a so-called progressing cavity pump (PC pump), in which a helical rotor revolves rotatingly about its own longitudinal axis around the centerline of a stator in which the rotor is eccentrically received. Per revolving movement around the stator axis, the rotor of the PC pump rotates once in opposite direction about its own axis.

In order to drive the pump rotor with the aid of an output shaft rotating about its centerline of, for instance, an electric motor, a transmission is needed. In the known PC pumps, this transmission is typically designed as a cardan shaft transmission.

A drawback of this cardan shaft transmission is that it causes the rotor to exert a relatively large radial force on the stator near the coupled end. Further, a drawback of the known manner of driving is that the rotor is guided with the aid of the stator surface.

In practice, this causes the PC pump to be subject to relatively strong wear. Further, the stator is designed from relatively elastic material, such as rubber. As a result, in practice, the use of the PC pump has remained limited to pumping thick liquid, such as cement or pastes.

The invention contemplates a transmission for realizing above-mentioned transmission, with which, while maintaining the advantages, the drawbacks mentioned can be obviated. The invention further contemplates a transmission which can form a variator between two drive elements.

To this end, the invention provides a transmission, comprising a rotary shaft for coupling with a first drive element, provided with a wheel supported eccentrically and freely rotatably on the shaft for coupling with a second drive element, further comprising a ring arranged concentrically and rotatably with respect to the rotary shaft, which ring is provided with a first tread cooperating which the tread of the wheel and is provided with a second tread cooperating with the tread of an auxiliary drive element, such that rotation of the rotary shaft results in a corresponding circular revolving movement of the wheel around the centerline of the rotary shaft, while rotation of the wheel about its own axis depends on the rotation of the rotary shaft and on the rotation of the ring about the centerline of the rotary shaft.

By driving the ring with the aid of the auxiliary drive element, the circumference of the inner tread of the ring can, as it were, relatively be increased or decreased, so that the rotation of the wheel can be set as desired. The first and second tread may, for instance, be designed as internal toothings and external toothings of the ring, respectively, but may also be external toothings or internal toothings of different diameters.

Preferably, the wheel is a toothed wheel and the ring is a toothed ring cooperating with the toothed wheel and a second toothing cooperating with a toothing of the auxiliary drive element. By designing the treads as toothings, an accurate transmission can be realized with a good and efficient force transmission.

The auxiliary drive element may be coupled with the rotary shaft via a transmission, for instance with a fixed transmission ratio. Such a transmission with fixed transmission ratio may, for instance, be realized with the aid of a toothed wheel transmission between the external toothing of a toothed ring and the rotary shaft. Preferably, one revolution of the rotary shaft results in one opposite revolution of the toothed wheel around its own axis.

By coupling the auxiliary drive element with a servomotor, for instance by designing the auxiliary drive element as a worm wheel driven via an auxiliary electric motor, which worm wheel engages the external toothing of the toothed ring, the transmission ratio can be chosen freely. In this manner, the transmission can be used as a variator. The wheel may then, for instance, via a cardan shaft transmission, be coupled with an input shaft of a second drive element whose rotary shaft extends co-parallel to the rotary shaft of the first drive element.

In an elegant manner, in a same transmission ration as with the ring, the wheel cooperates with a tread of a further auxiliary ring arranged next to the ring, concentrically with the rotary shaft. For instance, a toothing of the wheel cooperates with the toothing of the auxiliary ring with the same distance of the line of action to the rotary shaft of the first drive element as the line of action between wheel and ring. Optionally, a same transmission ratio may also be realized with the aid of, for instance, eccentric toothed wheels cooperating with oval toothed wheels.

Such an auxiliary ring may be designed as an end auxiliary ring supporting a further rotary shaft arranged co-parallel to the rotary shaft and providing the coupling with the second drive element.

Alternatively, the ring may be designed as an intermediate auxiliary ring provided with a further auxiliary wheel arranged eccentrically and freely rotatably, so that, by repeating the construction, a multi-stage variator can be formed. In such a case, for instance, a second ring arranged concentrically and rotatably with respect to the rotary shaft may be provided, which second ring is provided with an internal tread cooperating with the tread of the auxiliary wheel and is provided with an external tread cooperating with the tread of a second auxiliary drive element.

If desired, the auxiliary wheel may also cooperate with the internal tread of a second auxiliary ring forming an end auxiliary ring or an auxiliary ring forming, in turn, a second intermediate auxiliary ring for making a third stage, etc.

By driving the first and second auxiliary drive elements with one or more servomotors, a variator can be created with two control stages. However, the auxiliary drive elements may also be used for realizing branches or inputs with mutually different rotational speeds.

For bearing-mounting the rotating revolving movement, preferably one or more double bearings are provided which are each built up from a cylindrical first bearing eccentrically received in a second cylindrical bearing.

In an elegant manner, the bearings are not only designed for absorbing a radial force component, but also for absorbing an axial force component, for instance by designing the bearings as angular ball bearings.

By sealing the surfaces in which the bearings are located, a bearing shield can be formed.

Such a double bearing and/or bearing shield may be used in an advantageous manner for bearing-mounting the rotating revolving movement of the wheel or auxiliary wheel, but may, as will be explained hereinbelow, even in itself be used in an advantageous manner in a different environment, for instance for bearing-mounting a helical rotor of a PC pump conventionally driven with a cardan shaft transmission, Oldham coupling or flexible coupling.

In an advantageous embodiment, the transmission is coupled with a helical rotor so that a PC pump or PC motor can be formed.

Here, the wheel is preferably coupled with the rotor which is provided with at least one helical winding extending around a rotor centerline which is received in a stator.

By use of the transmission according to the invention, where the transmission ratio is chosen such that one revolution of the rotary shaft results in one opposite revolution of the wheel around its own axis, the revolution and rotation of the rotor can be driven without exerting radial force on the stator and, further, the rotor does not need to be guided by the stator surface anymore, but it can carry out an independent movement.

By receiving the free end of the rotor in the above-described double bearing, what can be achieved is that the rotor can be received in the stator opening with accurate fit and, if desired, without contact.

Rotor and stator may both be manufactured from relatively stiff material, in particular steel. Further, between rotor and stator, an accurate fit may be provided, so that the PC pump can be used as a compressor, or even as a motor.

In an advantageous manner, the stator has a thin-walled design. Here, on its outer surface, the stator may be provided with ribs extending in axial direction which can act as cooling ribs and/or stiffening ribs.

By designing the rotor to be thin-walled, what can be achieved is that it can be constructed to be relatively strong and light, while, further, there is a possibility of receiving the rotor in the cooling circuit.

If desired, the rotor can further be stiffened by receiving an internal profile in the rotor, for instance a helically wound box profile.

By having the diameter of stator and rotor shift along the centerline, a multi-stage pump or compressor can be formed.

In this manner, in the direction of movement from the cavity to the rotor/stator combination, one or more capacity shifts can be realized.

When, at the location of such a shift, a supply channel is provided which opens into the receiving opening, a mixing pump can be realized in an elegant manner.

When the rotary shaft is an input shaft, the rotor can be a displacement body of a pump, compressor or mixer.

When the rotary shaft is an output shaft, the rotor can be a displaced body of a motor, for instance a hydraulic motor or an internal combustion engine.

In an elegant manner, the parts of the sidewalls of the rotor running straight in cross section may further be provided with cavities located below the surface for realizing a resilient seal. Such cavities may, for instance, be filled with a liquid material, allowing a sealing protuberance to be created on the low-pressure side of the stator.

Such a cavity may, for instance, be formed by receiving a mounting slot in the stator wall, in which a hollow core strip optionally filled with liquid material can be received.

If desired, the cooperating surfaces of rotor and stator may also be provided with a lining material, such as a chemically resistant material, a wear-resistant and/or friction-reducing material.

Examples of such lining material are, for instance, PTFE or ceramic material.

The invention will be explained in more detail on the basis of an exemplary embodiment shown in the drawing, in which:
Fig. 1 shows a schematic side elevational view of a first embodiment of a transmission according to the invention;
Fig. 2 shows a schematic front view of the transmission of Fig. 1;
Fig. 3 shows a schematic top plan view of the transmission of Fig. 1 coupled to a PC pump;
Fig. 4 shows a schematic front view of the stator of the PC pump in which the position of the stator is shown in successive steps with the corresponding positions of the transmission above them;
Fig. 5 shows a schematic longitudinal cross section of a thin-walled stator provided with cooling ribs;
Fig. 5A shows a cross section along the line A-A in Fig. 5;
Fig. 6 shows a schematic longitudinal cross section of a rotor-stator combination with shifting diameter;
Fig. 7 shows a schematic longitudinal cross section of a helical rotor of a PC pump bearing-mounted with an eccentric double bearing;
Fig. 8 shows a schematic front view of a variant of the transmission with free transmission ratio;
Fig. 9 shows a schematic side elevational view of the transmission of Fig. 8;
Fig. 10 shows a schematic side elevational view of a multi-stage variant of the transmission;
Fig. 101 shows an exploded view of an input shaft with an eccentric wheel;
Fig. 102 shows an exploded view of an input shaft with four eccentric wheels;
Fig. 103 shows a perspective view of an input shaft with four eccentric wheels; .
Fig. 104A shows a perspective view of a second input shaft;
Fig. 104B shows a cross section of a second input shaft;
Fig. 105A shows a perspective view of a first input shaft, a second input shaft and eccentric wheels;
Fig. 105B shows a cross section of a first input shaft, a second input shaft and eccentric wheels;
Fig. 106A shows a perspective view of a first input shaft, a second input shaft and eccentric wheels with rotations;
Fig. 106B shows a perspective view of a first input shaft, a second input shaft and eccentric wheels with rotations, with the second input shaft rotating as well;
Fig. 106C shows a side elevational view of an assembled wheel;
Fig. 106D shows a perspective view of a wheel manufactured in one piece;
Fig. 107A shows a perspective view of a transmission according to the invention;
Fig. 107B shows a cross section of a transmission according to the invention;
Fig. 108A shows a front view of a transmission according to the invention with internal treads;
Fig. 108B shows a cross section of a transmission according to the invention with internal treads;
Fig. 108C shows a perspective view of a transmission according to the invention with internal treads;
Fig. 108D shows a perspective view of a transmission according to the invention with internal treads with input shafts rotating oppositely to one another;
Fig. 109A shows a front view of a transmission according to the invention with internal treads with small eccentricity;
Fig. 109B shows a cross section of a transmission according to the invention with internal treads with small eccentricity;
Fig. 109C shows a side elevational view of a transmission according to the invention with internal treads with small eccentricity;
Fig. 110 shows side elevational views and front views with shifting centerlines of the eccentric wheels;
Fig. 111 shows a side elevational view of a transmission according to the invention with a central opening in the output shaft;
Fig. 112 shows a transmission according to the invention with a second output shaft;
Fig. 113 shows a transmission according to the invention in which a servo drive of the second input shaft is replaced;
Fig. 114 shows a transmission according to the invention in which the second output shaft is a rotor;
Fig. 115 shows a transmission according to the invention in a complete pump drive.

It is noted that the Figures are only schematic representations of preferred embodiments of the invention which are given by way of non-limiting exemplary embodiments. In the Figures, same or corresponding parts are designated by same reference numerals.

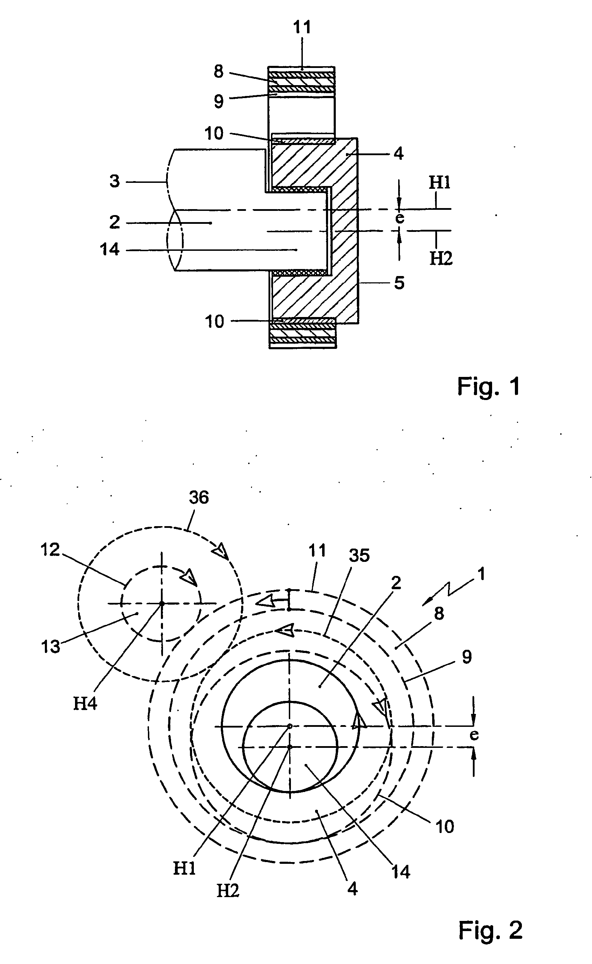

Figs. 1-4 show a transmission 1. The transmission 1 comprises a rotary shaft 2 arranged rotatably with respect to a centerline H1. The rotary shaft is designed for coupling with a first drive element 3, for instance an electric motor. The rotary shaft 2 is provided with a toothed wheel 4 supported eccentrically, with eccentricity e, on the rotary shaft 2. The toothed wheel is supported on the rotary shaft 2 so as to be freely rotatable with respect to its own centerline H2. The toothed wheel 4 is designed for coupling with a second drive element 5, which is, for instance, connected with the rotor 6 of a PC pump 7.

The transmission 1 further comprises a toothed ring 8 arranged concentrically and freely rotatably about the centerline H1 of the rotary shaft 2. The toothed ring 8 is provided with a first toothing 9 cooperating with the toothing 10 of the toothed wheel 4.

The toothed ring 8 is further provided with a second toothing 11 cooperating with the toothing 12 of an auxiliary drive element 13.

In this exemplary embodiment, the auxiliary drive element is a toothed wheel coupled with the rotary shaft 2 via a fixed transmission ratio. To this end, the rotary shaft supports a toothed wheel 35 arranged so as to rotate along about centerline H1, which toothed wheel 35 cooperates with a toothed wheel 36 which in turn rotates along with the auxiliary drive element 13 designed as a toothed wheel about an axis of rotation H4.

Here, the transmission ratio between auxiliary drive element 13 and rotably shaft 2 is such that one revolution of the rotary shaft 2 results in an opposite revolution of the toothed wheel 4 around the centerline H2 of its own shaft.

The toothed wheel 4 is mounted on an eccentric projection 14 of the rotary shaft 2, which is located inside the shaft diameter. Of course, it is also possible to provide a crank projecting with respect to the shaft, on which the toothed wheel can be mounted.

The rotor 6 of the PC pump is provided with one helical winding 15 extending around a rotor centerline H3. The rotor centerline runs substantially parallel, with eccentric intermediate distance e, with respect to the centerline H1 of the rotary shaft 2, which coincides with the centerline of the stator 16. The rotor 6 is received in a receiving opening 17 of the stator 16. The receiving opening 17 is provided with two helical cavities 18 extending substantially parallel at eccentric distance e with respect to the centerline H1 of the rotary shaft 2, which cavities are interconnected via the center area 19 of the stator 16.

The pitch of the helical windings 18 of the stator is two times the pitch of the helical winding 15 of the rotor 6. Thus, the number of helical windings 18 of the stator 16 is one higher than the number of helical windings 15 of the rotor 6.

The rotor 6 and the stator 16 are manufactured from steel or another similar, relatively stiff material. The cooperating surfaces of rotor and stator are provided with a lining, for instance a ceramic coating.

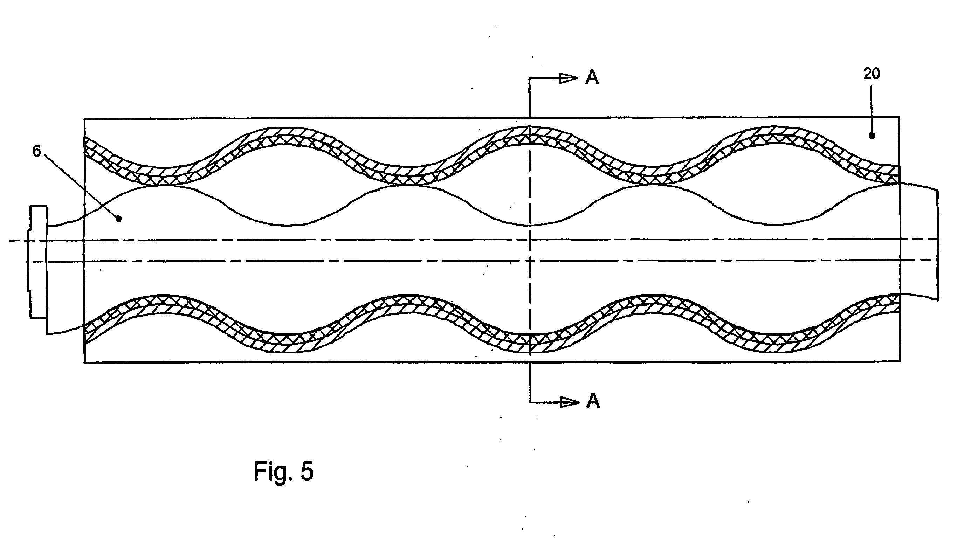

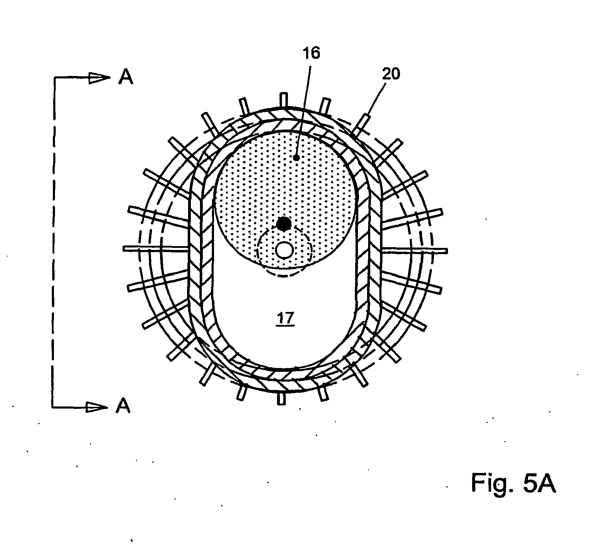

As shown in Fig. 5, the stator has a thin-walled design. On its outer surface, the stator 16 is provided with ribs 20 extending in axial direction which act as combined cooling and stiffening ribs.

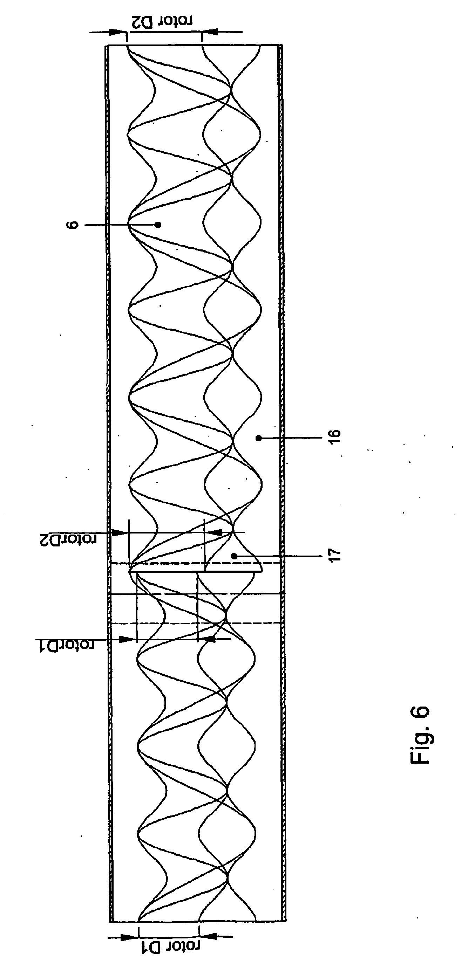

As shown in Fig. 6, rotor and stator are provided with a cross section shifting from a smaller diameter D1 to a larger diameter D2, so that the pump comprises two steps. When, at the location of the wider part with diameter D2, a channel which opens into the receiving opening 17 in the stator is provided, this channel can be used for feeding a substance to be mixed to the substrate to be pumped.

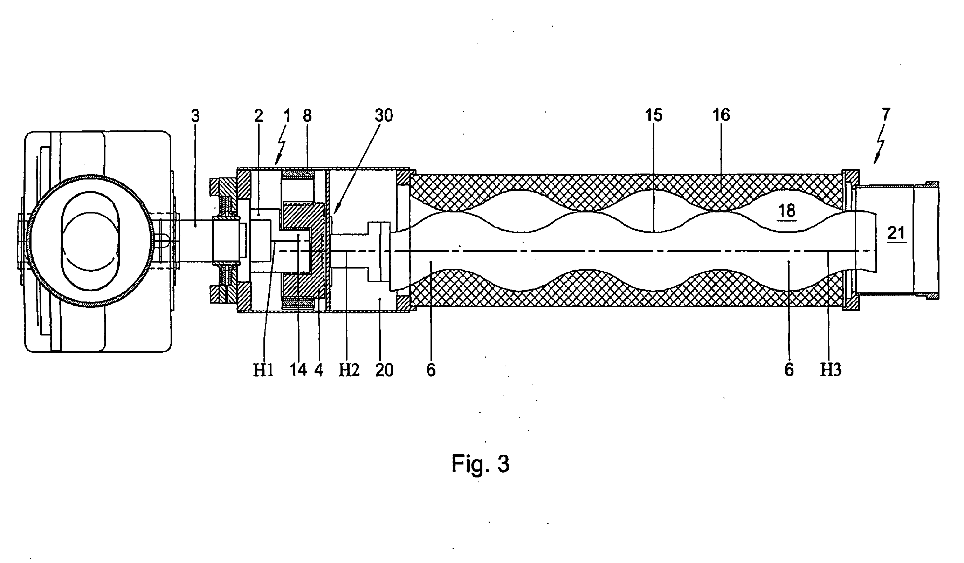

Fig. 3 shows that the PC pump 7 is provided with a cement slurry, input 20 from which cement slurry is suctioned out with the aid of a displacement space moving as a result of the rotor 6 moving in the stator receiving opening and is pressed to a press output 21.

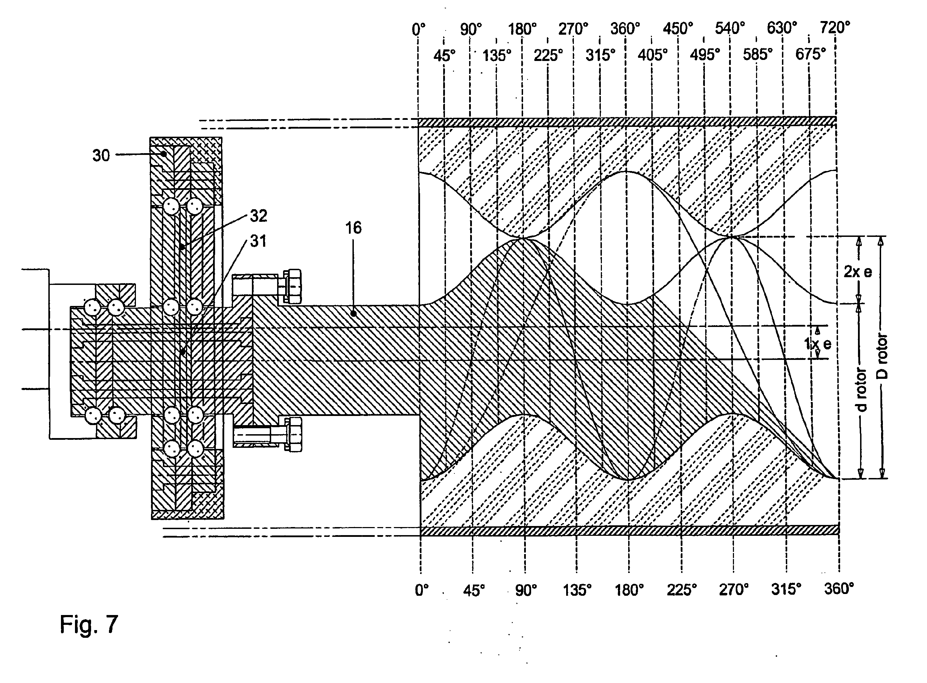

One side wall of the cement slurry input 20 is formed by a bearing shield 30. In Fig. 7, the bearing shield 30 is shown in more detail. The bearing shield bearing-mounts the rotating revolving movement of the rotor 6 and the toothed wheel 4 coupled therewith. The bearing shield is built up from a cylindrical first bearing 31 eccentrically received in a second cylindrical bearing 32. In order to absorb not only a radial force component, but also an axial force component exerted on the rotor by the slurry, the bearings 31 are each designed as double angular ball bearings. In order to prevent passage of slurry, the surfaces in which the bearings are located are sealed. In the embodiment as shown in Fig. 7, the double bearing can be used in an advantageous manner for a progressing cavity apparatus in which a helical rotor revolves rotatingly about its own longitudinal axis around the centerline of a stator in which the rotor is received eccentrically by guiding the side of the rotor which the transmission engages with the aid of an eccentric double bearing.

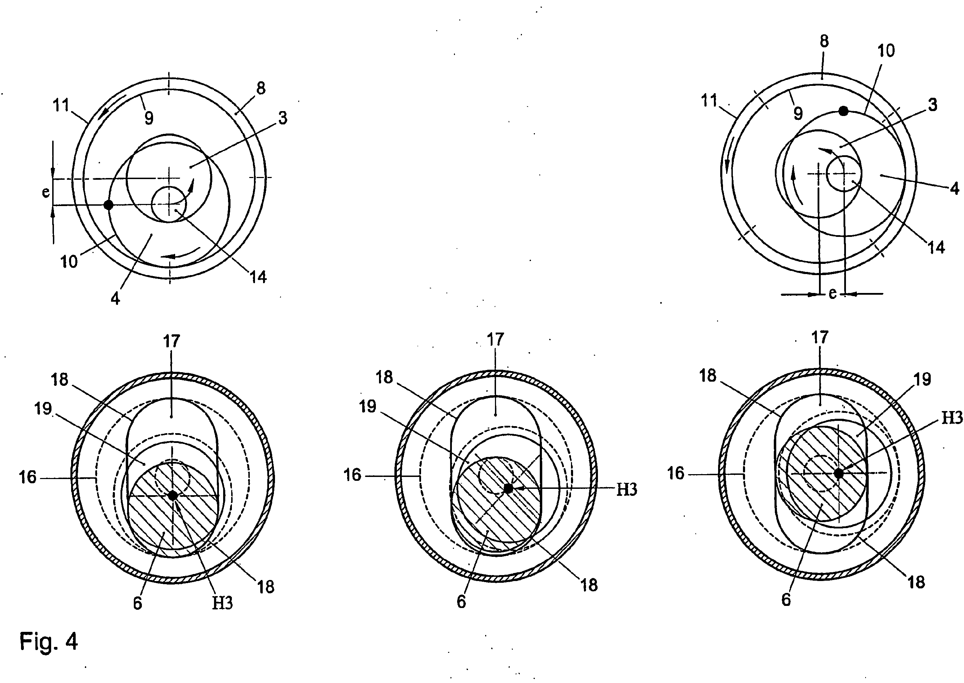

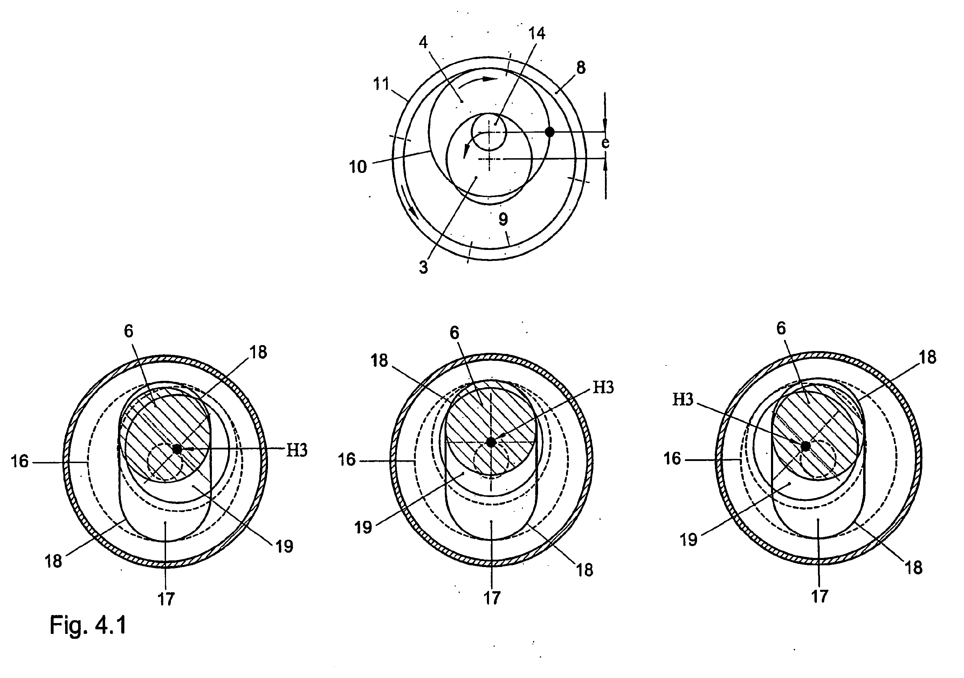

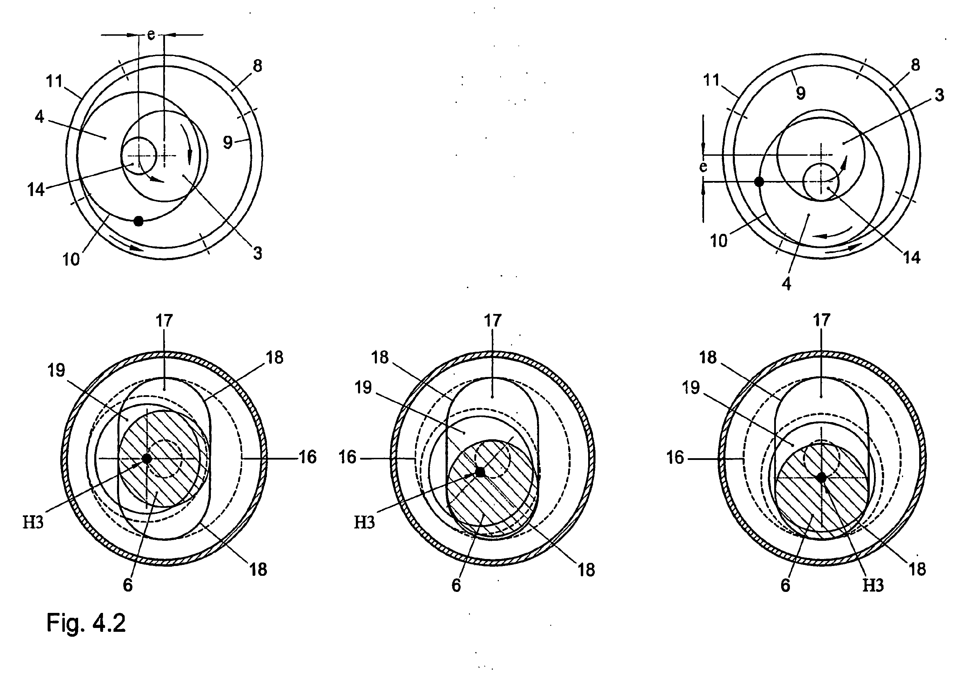

Fig. 4 shows how the stator proceeds through the successive steps when making one complete revolution. Here, the stator 16 rotates once in opposite direction about its own centerline H3. In the top representations of Fig. 4, it is shown that the toothed ring 8 is rotated to keep the rotation of the toothed wheel 4 about its centerline H2 limited to one complete rotation.

By using the transmission according to the invention, the rotor can be received in the stator with little play, so that use as a compressor or mud motor, or even internal combustion engine, is possible.

The free end of the rotor is then preferably bearing-mounted, for instance with the aid of the above-described double eccentric bearing.

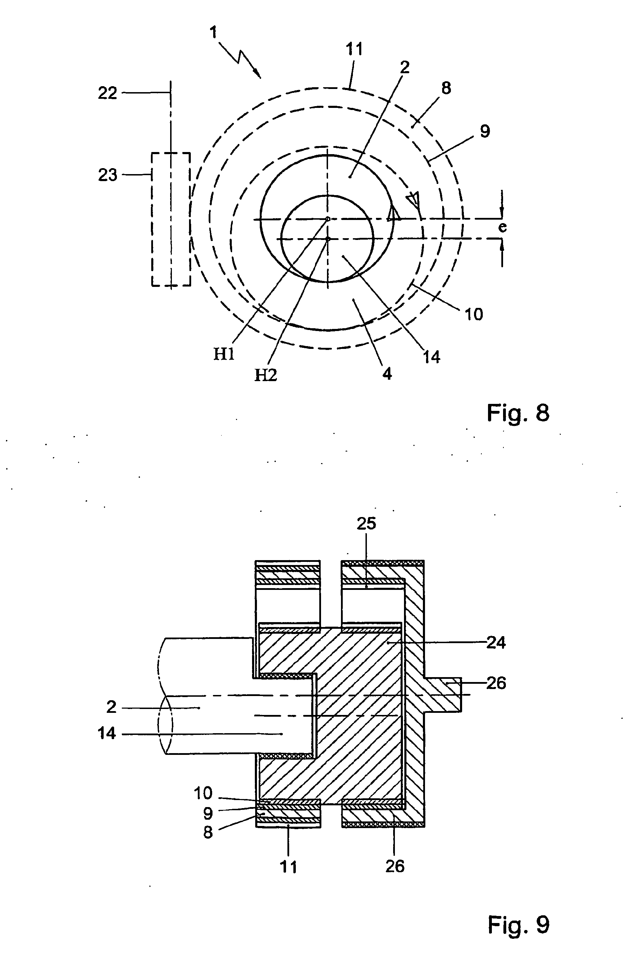

In an elegant manner, the auxiliary drive element 13 can be coupled with a servomotor. In this manner, a variator can be formed. This is schematically shown in Fig. 8 with the aid of a worm 23 driven by an auxiliary electric motor (not shown) and cooperating with a corresponding worm wheel toothing 11 on the outside of the toothed ring 8. With the aid of such a construction, the transmission ratio between auxiliary drive element and rotary shaft can be chosen freely so that, per circular revolving movement of the toothed wheel, the corresponding number of rotations of the toothed wheel about its own axis can be set freely. By elegantly providing an axial continuation 24 of the toothed wheel 4, the toothed wheel can further be designed for cooperating with a toothing 25 of an auxiliary toothed ring 26 arranged concentrically with the rotary shaft 2 with the same transmission ratio as with the toothed ring 8. Here, the auxiliary toothed ring 26 is designed as an end auxiliary ring. Here, the ring 26 supports a further rotary shaft 27 providing the coupling with the second drive element 5 and arranged co-parallel with the rotary shaft. In this manner, as shown in Fig. 9, a continuously variable transmission can be realized in an elegant manner.

With the aid of such a continuously variable transmission, a completely stepless variable output rotational speed from 0 to the maximum rotational speed can be realized in both directions of rotation. With a rotating input shaft, the output shaft can be stopped without uncoupling being necessary. Very low creeping speeds can be set, so that a lower power of the drive source can be chosen and/or a high torque is available.

The transmission is 100% slip-free and has a very high efficiency.

The dimensions are compact, while the construction is relatively simple and comprises few parts.

Such a variator may, for instance, be used for driving vehicles, hoists, agricultural machines, for propelling ships or for driving tools.

With the variator, a fixed connection remains present between the input shaft and output shaft at all times. With the aid of the variator, the output shaft of the drive can be stopped. Thus, when it is, for instance, controlled with the aid of an electronic control unit, the variator can excellently be used as a transmission in a car, while, also, functions like ESP or ABS can be realized via the transmission. It is noted that a ring like the auxiliary ring cannot only, as shown here, comprise a ring with inner toothing, but also a ring with outer toothing more closely resembling a wheel.

In a car or truck, in this manner, wheels can be driven directly via the transmission with an electric motor. In this manner, each wheel can be designed with its own drive motor.

The transmission can then be received in the rotor kit of the electric motor to thus obtain the most compact possible dimensions.

With respect to a wheel driven directly with an electric motor controlled with the aid of a frequency control, thus the advantage is achieved that the electric motor can have a relatively light design. This is because, with the aid of the transmission, the torque can be converted for, for instance, accelerating from a standstill. Further, with the aid of the transmission, the rotational speed of the output shaft can be controlled to zero. With the aid of the transmission, the rotating electric motor can be used to retain the output shaft when the output shaft stands still, so that the output shaft is blocked.

Use of such a wheel directly driven via the transmission with the aid of an electric motor in a vehicle yields numerous advantages. Thus, the conventional shaft sets and differentials can be omitted and batteries or fuel cells can be placed in the space which has become available.

The center of gravity of the vehicle can be lowered much and due to the different construction of the vehicle, more usable space becomes available. Further, in this manner, a trailer can simply be designed as a trailing device.

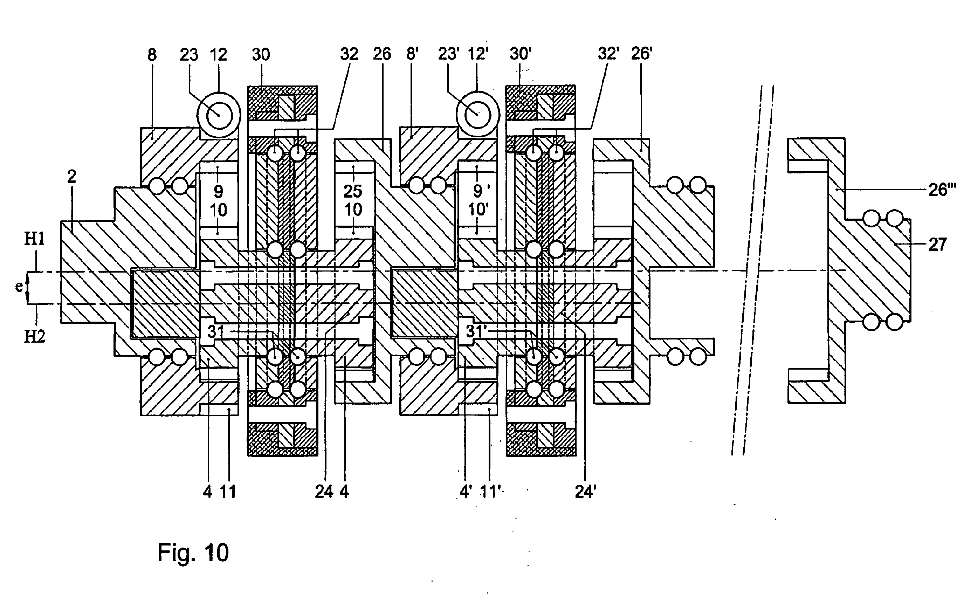

Fig. 10 shows a schematic side elevational view of a multi-stage variant of the transmission. In this embodiment, a second toothed ring 8' arranged concentrically and rotatably with respect to the rotary shaft is provided. The second toothed ring 8' is provided with an inner toothing 9' cooperating with the toothing 10' of an auxiliary wheel 4'. The second toothed ring 8' is provided with an outer toothing 11' cooperating with the toothing 12' of a second worm 23 driven by a second servomotor 22' (not shown).

An axial continuation 24' of the auxiliary toothed wheel 4' cooperates with a second auxiliary ring 26'. The second auxiliary ring 26' can form an end auxiliary ring supporting a further rotary shaft 27 or can, in turn, form a second intermediate auxiliary ring for making a third stage.

By driving the first and second worms 23, 23' with servomotors 22, 22', a variator can be created with two control stages. However, the worms 23, 23' may also be used for realizing shaft branches with mutually different rotational speeds.

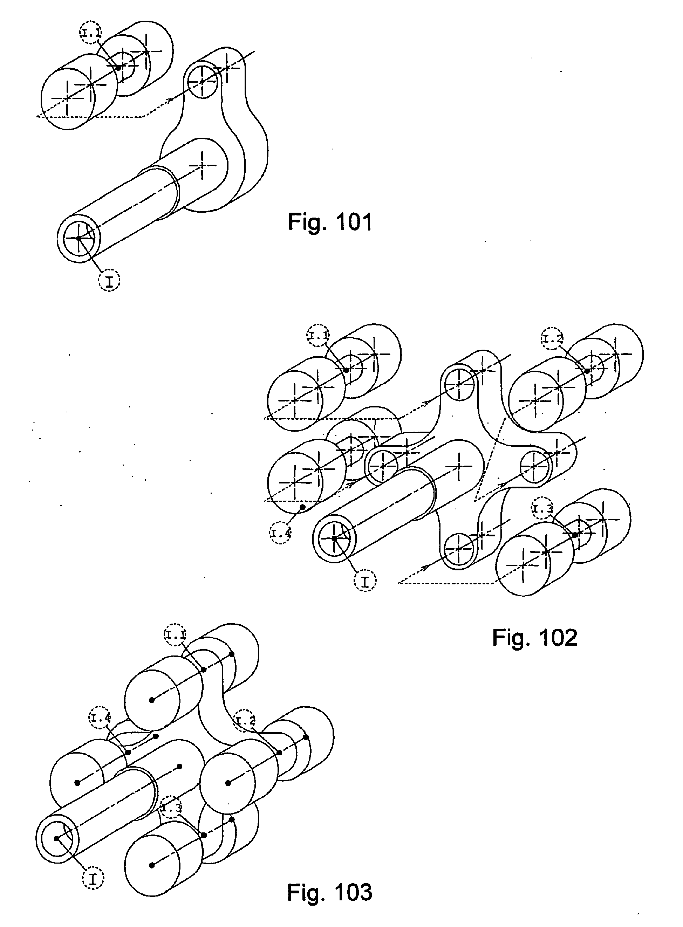

For further elucidation, the invention is again explained in the following with reference to Figs. 101-115.

The VanBeek-4D transmission, hereinafter to be referred to as VB4D and/or 4D is a drive reductor for use as:
a - a continuously variable drive reductor with an endless ratio from 0 (zero) to Overdrive;
b - a drive reductor with a fixed transmission ratio for ratios from > 0;
c - a drive reductor with a fixed transmission ratio for driving
c1 - eccentric helical worm rotors, *inter alia* also known as worm gear pump;

Schneckenpumpe and Exzenter-Schneckenpumpe, Progressive Cavity Pump (PCP) and Progressive Cavity Motor (PCM).

The 4D transmission is based on 3 elementary main parts I, II and III
I - central first input shaft with minimally one eccentric wheel (I.1-I.n)
II - central second input servo with at least one centric wheel
III - use-dependent station (a,b,c) or eccentric (c1) output shaft with at least one wheel

### General Wheel characteristics:

The wheel treads of the elementary main parts I, II and III may
d) have any design;
e) have any position on the respective wheel, while
f) the movement functions remain unchanged mutually with one another and with respect to one another and jointly

Wheel Tread examples are: metal tread, plastic, rubber, friction with friction oil, toothed, etc., etc.

Tread Exemplary embodiment: if toothed, possible toothings are *inter alia* straight, helical, hypoid, conical toothing, etc. and possible positions for this are on the outer circumference, on the inside, and/or on the side of wheel

### Part descriptions

Part I is a central input shaft with at least one eccentric wheel from I.1 to I.n.

Fig. 101 shows an input shaft I for one eccentric wheel I.1.

Fig. 102 shows an input shaft I for four eccentric wheels I.1-I.4.

Fig. 103 shows an input shaft I with four eccentric wheels I.1-I.4.

Part II is a central second input servo with at least one centric wheel tread.

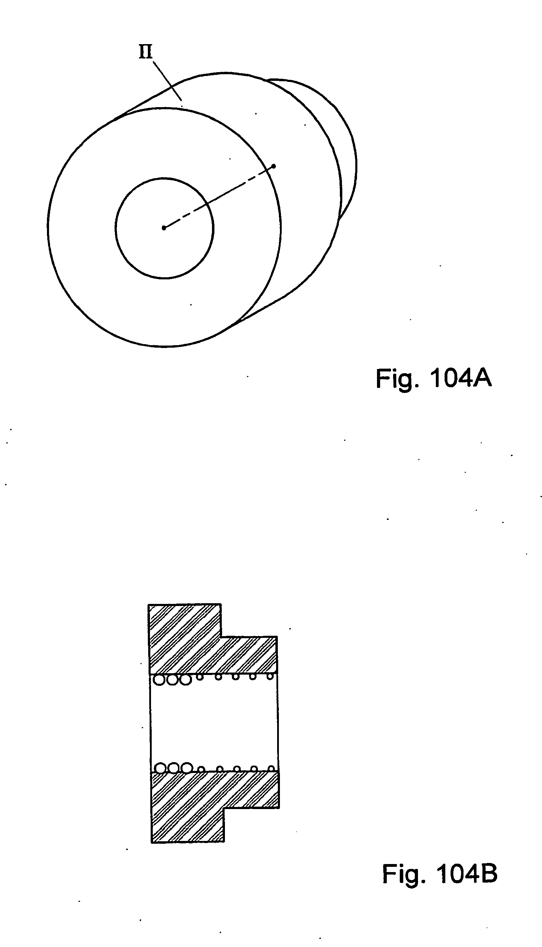

Fig. 104 shows the second input servo shaft as a concentric wheel. Fig. 104A shows part II in perspective view. Fig. 104B shows part II in cross section.

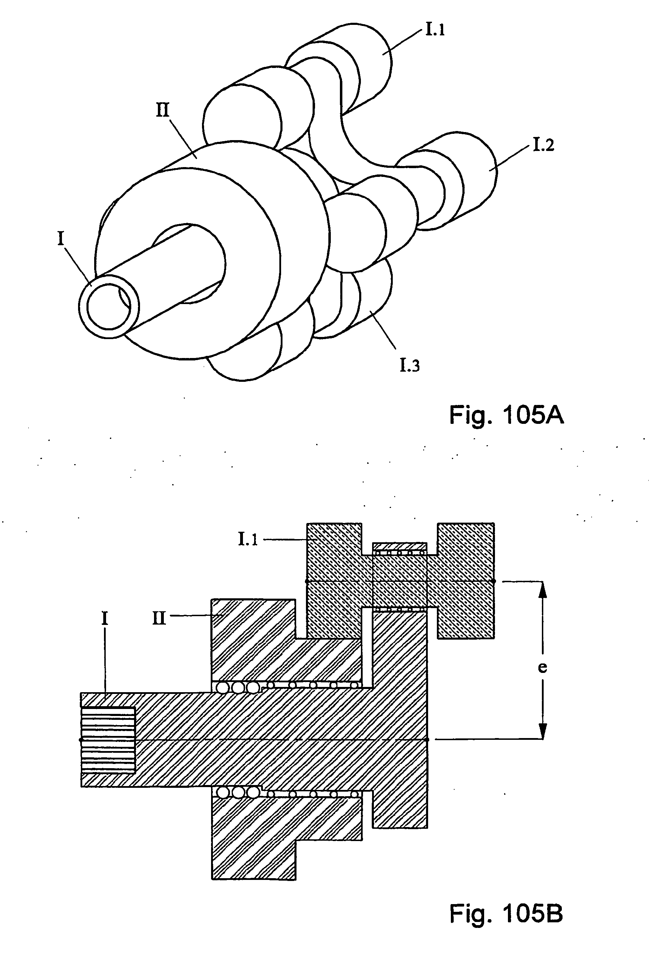

Fig. 105 shows the assembly with the first input shaft I. Fig. 105A shows parts I and II in perspective view. Fig. 105B shows parts I and II in cross section. The distance between the centerline of eccentric wheel I.1 and the centerline of part I is the eccentricity 'e'.

The second central input shaft - wheel II - is freely rotatably mounted on the central first input shaft I with a bearing.

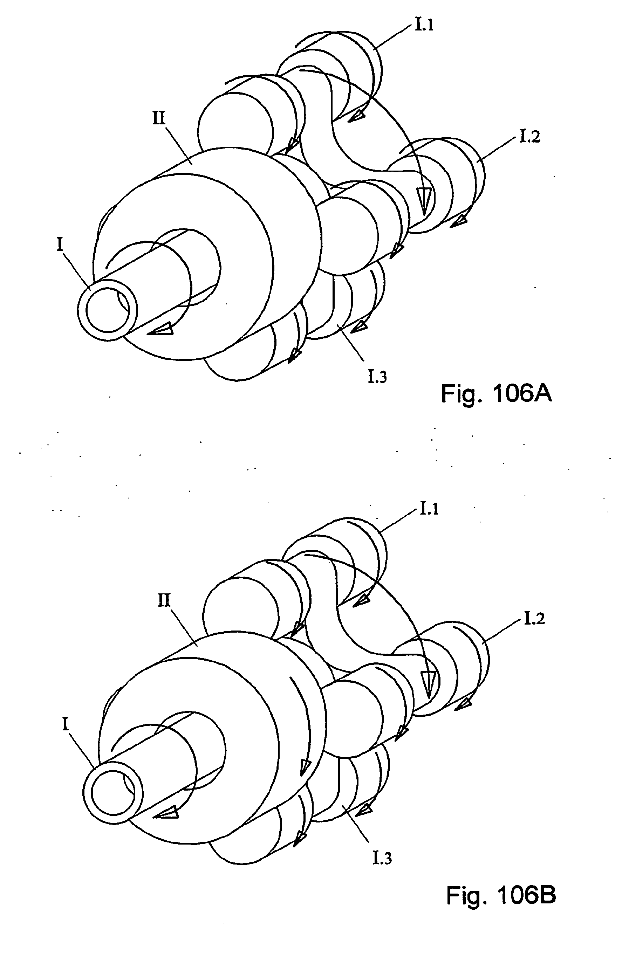

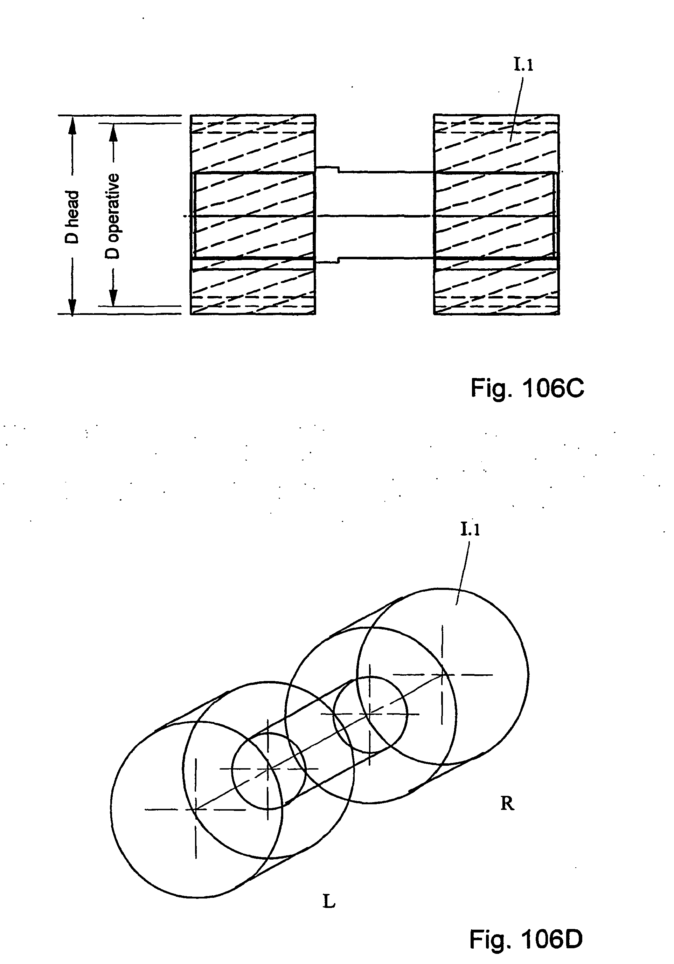

In Fig. 106A, the rotations are made visible which occur when the first input shaft I is driven and the second input shaft II is kept still by the second servomotor.

Suppose that the first input shaft I rotates at 1,000 rev/min.

The eccentric wheels I.1-I.4 are bearing-mounted at distance 'e' from the centerline of the first shaft I and therefore always rotate at the same speed and direction of rotation as the first shaft I, so at 1,000 rev/min.

The tread of each eccentric wheel directly abuts the stationary tread of the wheel II kept still. If they are toothed, they are even anchored in one another. This ensures that the eccentric wheels need to rotate about their own axes.

For the sake of simplicity, we now suppose that the diameter of wheel II, at the location of the tread, is equal to two times the diameter of the eccentric wheels. So, the diameter ratio between the eccentric wheels I.1-I.4. and the concentric wheel II is 1 : 2. The speed at which the eccentric wheels then rotate about their own axes is therefore 2,000 rev/min.

Fig. 106B shows first input shaft I with eccentric wheels I.1-I.4 and second input shaft II. The second input shaft II now rotates as well. The direction of rotation of first input shaft I and second input shaft II and the eccentric wheels is indicated with the aid of arrows. A second drive now also drives the second input shaft II to the right and suppose this is done at a speed of 1 rev/min. The first shaft I continues to rotate at 1,000 rev/min to the right without change. Because the tread of II rotates in the same direction as I, the rotational speed of the eccentric wheels at which they rotate about their own axes will decrease. However, this is not the speed at which they rotate about the central centerline with shaft I; this remains 1,000 rev/min. The rotational speed of the eccentric wheels about their own centerline is decelerated, the reduction being equal to 1 rev/min of wheel II because it runs along in the same direction. Because one revolution of wheel II is equal to two revolutions of an eccentric wheel, the own rotation of these wheels is reduced by 2 rev/min, so from 2,000 to 1,998 rev/min. So, the eccentric wheel or assembly of eccentric wheels revolves at 1,000 rev/min with the central first shaft I to the right around the centerline of the transmission, while it further rotates at 1,998 rev/min (also to the right) about its own wheel axis.

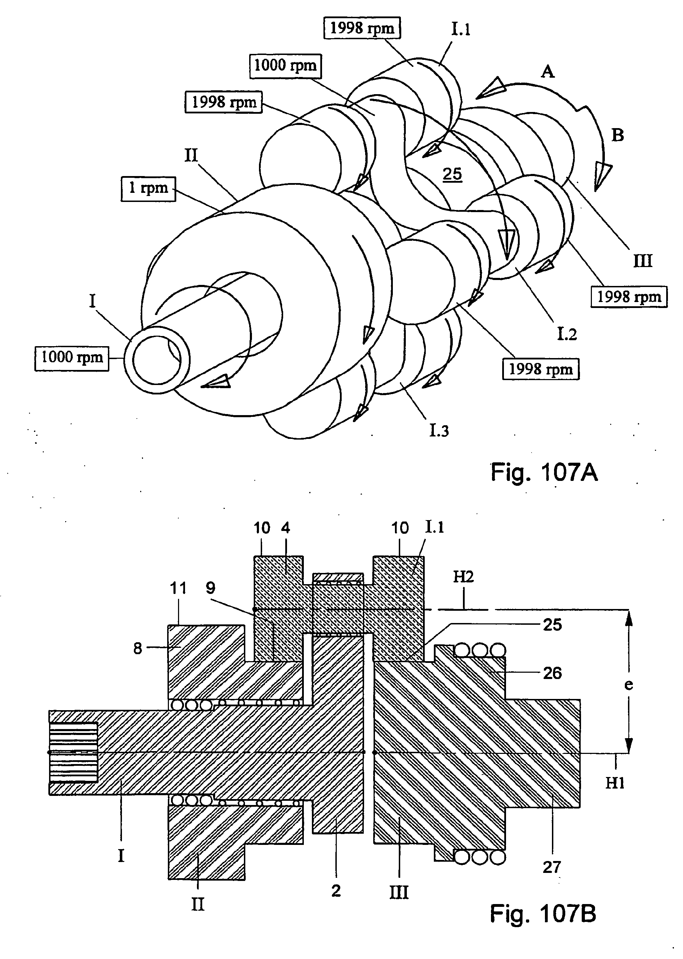

Fig. 107 represents the first input shaft I with eccentric wheels I.n and the second input shaft II. Further, Fig. 107A further shows a third input shaft III. Fig. 107A shows the configuration in perspective view. Fig. 107B shows the shafts I, II and III and a wheel I.1 in cross section. The above-discussed movements and their results are shown in Fig. 107A where they become manifest.

At the transmission output, arrows A and B indicate opposite directions of rotation of element III. The output shaft - element III - indeed simultaneously carries out two completely opposite movements. The tread of eccentric wheel I.1 makes the tread 25 of the output shaft III rotate at 1,998 + ratio 2 = 999 rev/min to the left and that is direction A. At the same time, eccentric wheel I.1 takes that same tread 25 along in direction B at the speed of the input shaft I = 1,000 rev/min. So, the resulting speed between A and B is 1 rev/min. Since B is greater than A, the direction of the resultant is in direction B, so to the right. In this manner, a variable transmission is realized with ratios from zero to Overdrive.

The transmission as shown in Fig. 107B comprises a rotary shaft I, 2 for coupling with a first drive element. The rotary shaft I, 2 is provided with a wheel I.1, 4 eccentrically and freely rotatably supported on the shaft I, 2 for coupling with a second drive element. The transmission further comprises a ring II, 8 arranged concentrically and rotatably with respect to the rotary shaft I, 2, which ring II, 8 is provided with a first tread 9 cooperating with the tread of the wheel I.1, 4. The ring II, 8 is further provided with a second tread 11 cooperating with the tread of an auxiliary drive element - not shown here - such that rotation of the rotary shaft I, 2 results in a corresponding circular revolving movement of the wheel I.1, 4 about the centerline H1 of the rotary shaft I, 2. Rotation of the wheel I.1, 4 about its own axis H2 depends on the rotation of the rotary shaft I, 2 and on the rotation of the ring II, 8 about the centerline H1 of the rotary shaft I, 2. Further, the wheel I.1, 4 cooperates with a tread 25 of an auxiliary ring 26 arranged concentrically with the rotary shaft I, 2 in a same transmission ratio as with the ring II, 8. Here, the auxiliary ring 26 is designed as an end auxiliary ring. Here, the ring 26 supports a further rotary shaft III, 27 arranged co-parallel with the rotary shaft.

### Calculation examples Fig.107A

Tread diameters: input shaft II = output shaft III (fixed condition)

Eccentric wheel I.1 = 0.5 x input and output shafts II and III = ratio 2 (no fixed condition, 'accidentally' holds in this example)

Eccentric wheel I.1 = eccentric wheel I.2-I.n (fixed condition if more than one eccentric wheel is used)

Left tread diameter of eccentric wheel I.1 = Right tread diameter of eccentric wheel I.1, with identical toothing position.

### Example 1

| | |
|---|---|
| first input shaft I | 1,000 rpm to the right |
| second input shaft II | 0 rpm |
| third output shaft III | ? rpm |

relative n of input shaft I with respect to input shaft II = 1,000 rpm to the right
n of eccentric wheel I.1 = 1,000 x 2 = 2,000 rpm to the right so that output shaft III 2,000 ö 2 = 1,000 rpm to the left = A, but eccentric wheel I.1 also circulates to the right at 1,000 rpm = B

The resultant of A and B = 0 rpm = n of output shaft III

### Example 2

| | |
|---|---|
| first input shaft I | 1,000 rpm to the right |
| second input shaft II | 0 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft III 1,998 ö 2 = 999 rpm to the left = A, but eccentric wheel I.1 also circulates to the right at 1,000 rpm = B

The resultant of A and B = 1 rpm to the right = n of output shaft III

### Example 3

| | |
|---|---|
| first input shaft I | 8,000 rpm to the right |
| second input shaft II | 1,200 rpm to the right |
| third output shaft III | ? rpm |

relative n of input shaft I with respect to input shaft II = 6,800 rpm to the right
n of eccentric wheel I.1 = 6,800 x 2 = 13,600 rpm to the right so that output shaft III 13,600 ö 2 = 6,800 rpm to the left = A, but eccentric wheel I.1 also circulates to the right at 8,000 rpm = B

The resultant of A and B = 1,200 rpm to the right = n of output shaft III

### Example 4

| | |
|---|---|
| first input shaft I | 1,500 rpm to the right |
| second input shaft II | 200 rpm to the left |
| third output shaft III | ? rpm |

relative n of input shaft I with respect to input shaft II = 1,700 rpm to the right
n of eccentric wheel I.1 = 999 x 2 = 1,998 rpm to the right so that output shaft III 1,998 ö 2 = 999 rpm to the left = A, but eccentric wheel I.1 also circulates to the right at 1,000 rpm = B

The resultant of A and B = 1 rpm to the right = n of output shaft III

### Example 5

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1= 999 x 2 = 1,998 rpm to the right so that output shaft III 1,998 ö 2 = 999 rpm to the left = A, but eccentric wheel I.1 also circulates to the right at 1,000 rpm = B

The resultant of A and B = 1 rpm to the right = n of output shaft III

### Example 6

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft II 1,998 ö 2 = 999 rpm to the left = A, but eccentric wheel I.1 also circulates to the right at 1,000 rpm = B
The resultant of A and B = 1 rpm to the right = n of output shaft III

### Example 7

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft II 1,998 ö 2 = 999 rpm to the left = A, but eccentric wheel I.1 also circulates to the right at 1,000 rpm = B

The resultant of A and B = 1 rpm to the right = n of output shaft III

The examples show that the rotational speed and the direction of rotation of the output shaft III are the same as the rotational speed and the direction of rotation of input shaft II, independent of the input shaft I. One could say that the rotating eccentric wheel I.1 'fixes' the output shaft III with respect to the input shaft II. The input shaft II, which can either stand still, or rotates at a uniform speed, or rotates in an accelerated or decelerated manner, thus controls the movements, including the standstill, of the output shaft III.

Further properties and/or uses of the transmission are found in starting, driving away and braking.

### STARTING AND PARKING POSITION

The VB4D can be started with the output shaft of the motor being fixedly connected with the VB4D via the input shaft I. With a still servomotor of the input shaft II, the output rotational speed of shaft III is zero. A coupling, either dry or wet, is then not needed anymore.

When the servomotor stands still, the vehicle is also blocked. This makes a parking brake unnecessary.

### DRIVING AWAY, ACCELERATING

The driving away itself and the acceleration thereof only depend on the available torque. In the high ratios, as with motor revolutions of 1,000 rpm input to 1 rpm output, a 1,000-fold motor torque is available behind the transmission, neglecting approx. 3% of transmission losses. Thus, sporty acceleration can take place, but a fuel-efficient, economical acceleration is also possible. The transmission control then keeps the motor speed at the lowest position necessary for driving away smoothly.

### DECELERATING, BRAKING

Similarly to driving away, with the servomotor, it is also possible to reduce speed either forcefully or smoothly to a standstill. Thus, the existing brake provision would not be needed anymore. Technically, not the brake disc and the brake pad are determinative, but the retardation force, the control thereof and the failure analysis and the like. In any case, by use of the VB4D transmission, the use and maintenance of the brakes is reduced.

### CRUISING

In one embodiment, the driver can optionally set the VB4D control to economy, sporty or gearshift by pressing a button. Economy continuously adjusts the ratio to the tractive resistance and/or emergency stop command.

In the embodiment of Fig. 107, the toothings on the left part and right part of an eccentric wheel are aligned. By choosing the operative diameters of the eccentric wheel so as to be equal on the left and right, it is achieved that output shaft III stands still when input shaft II stands still.

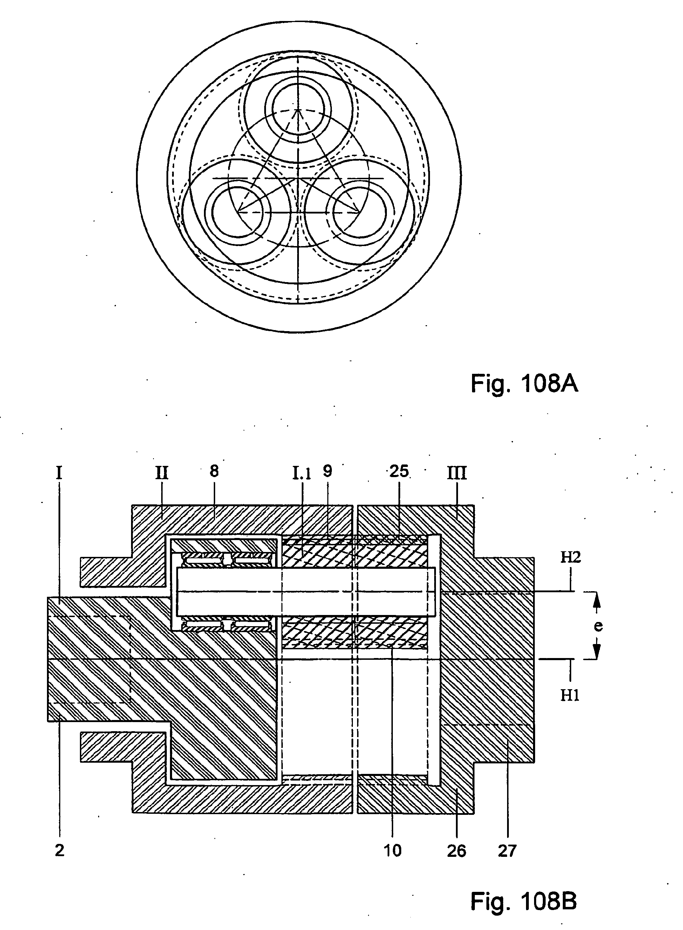

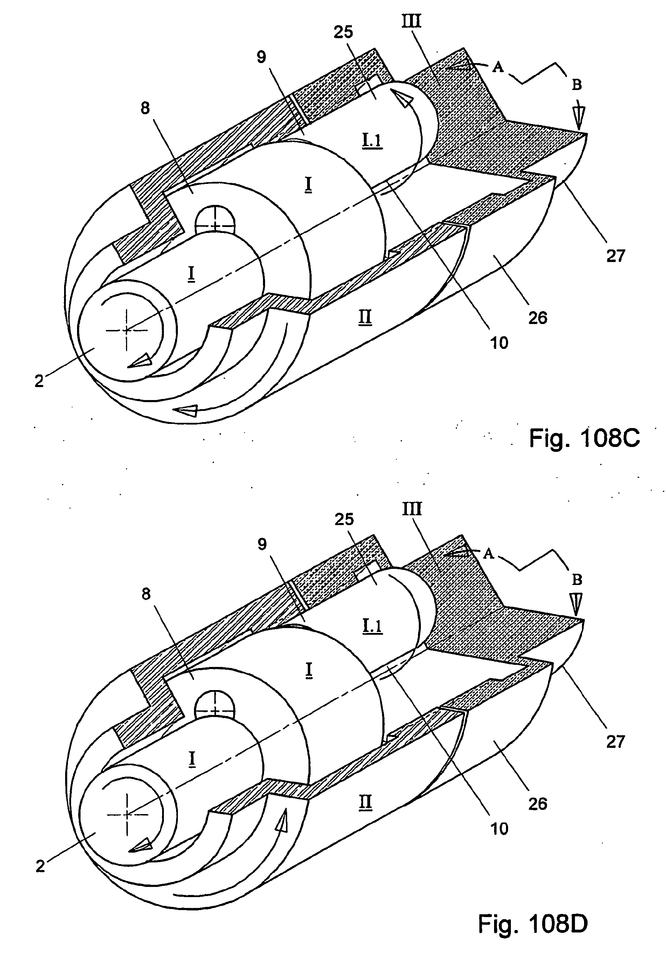

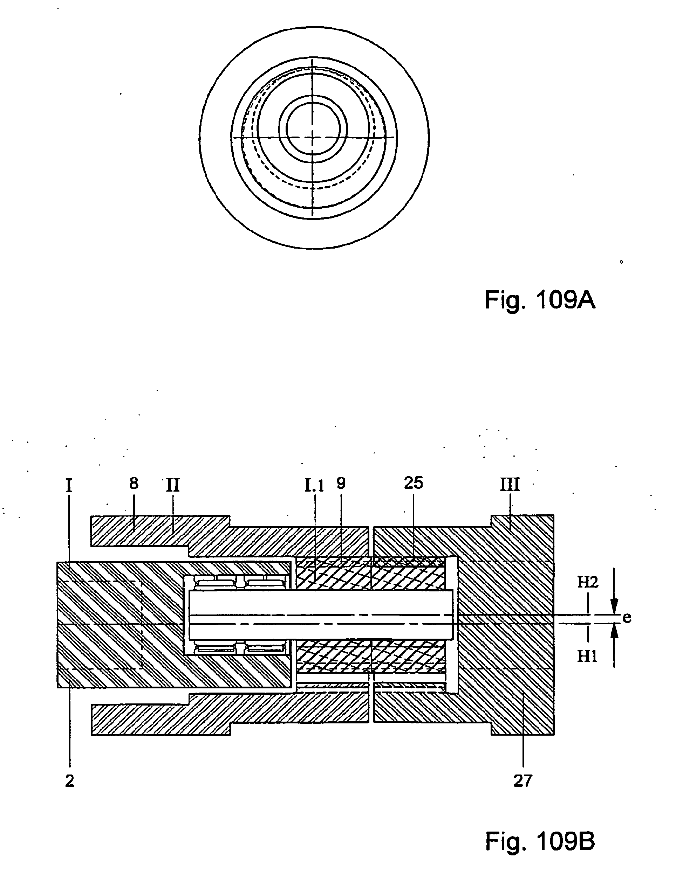

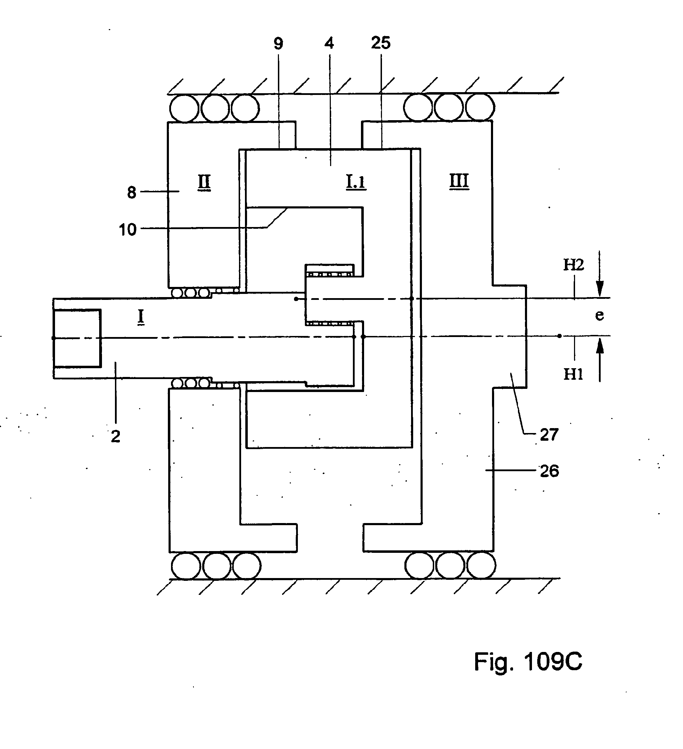

Further embodiments are shown in Fig. 108 and Fig. 109. Fig. 108 relates to a VB4D with internal treads for the shafts II and III. Fig. 108A shows a front view, Fig. 108B shows a cross section. Fig. 108C shows a perspective view of the embodiment with internal treads, the shafts I and II having a same direction of rotation. In Fig. 108D, the direction of rotation of the shafts I and II is opposite. Fig. 109A and Fig. 109B show a front view and a cross section, respectively, of an embodiment with internal treads for the shafts II and III, the eccentricity 'e' being smaller than the diameter of the input shaft I. Fig. 109C shows another exemplary embodiment of the VB4D with small eccentricity 'e'. Due to the small eccentricity, the eccentric wheel I.1 needs to be led 'around' the shaft I for being able to continue to carry out its function in the same manner.

### Calculation examples with Fig. 108C.

Tread diameters: input shaft II = output shaft III (fixed condition)

Eccentric wheel I.1= 0.5 x input and output shafts II and III = ratio 2 (no fixed condition, 'accidentally' holds in this example)

Eccentric wheel I.1 = eccentric wheel I.2-I.n (fixed condition if more than one eccentric wheel is used)

Left tread diameter of eccentric wheel I.1= Right tread diameter of eccentric wheel I.1, with identical toothing position.

### Example 8

| | |
|---|---|
| first input shaft I | 1,000 rpm to the right |
| second input shaft II | 0 rpm |
| third output shaft III | ? rpm |

relative n of input shaft I with respect to input shaft II = 1,000 rpm to the right
n of eccentric wheel I.1 = 1,000 x 2 = 2,000 rpm to the right so that output shaft III 2,000 ö 2 = 1,000 rpm to the left = A, but eccentric wheel I.1 also circulates to the right at 1,000 rpm = B

The resultant of A and B = 0 rpm = n of output shaft III

### Example 9

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft III 1,998 ö 2 = 999 rpm to the left = A, but eccentric wheel I.1 also circulates to the right at 1,000 rpm = B The resultant of A and B = 1 rpm to the right = n of output shaft III

### Example 10

| | |
|---|---|
| first input shaft I | 1,000 rpm to the right |
| second input shaft II | 1 rpm to the right |

| | |
|---|---|
| third output shaft III | ? rpm |

relative n of input shaft I with respect to input shaft II = 999 rpm to the right
n of eccentric wheel I.1 = 999 x 2 = 1,998 rpm to the right so that output shaft III 1,998 ö 2 = 999 rpm to the left = A, but eccentric wheel I.1 also circulates to the right at 1,000 rpm = B

The resultant of A and B = 1 rpm to the right = n of output shaft III

### Example 11

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft III 1,998 ö 2 = 999 rpm to the left = A, but eccentric wheel I.1 also circulates to the right at 1,000 rpm = B

The resultant of A and B = 1 rpm to the right = n of output shaft III

### Example 12

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft II 1,998 ö 2 = 999 rpm to the left = A, but eccentric wheel I.1 also circulates to the right at 1,000 rpm = B

The resultant of A and B = 1 rpm to the right = n of output shaft III

### Example 13

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft II 1,998 ö 2 = 999 rpm to the left = A, but eccentric wheel I.1 also circulates to the right at 1,000 rpm = B

The resultant of A and B = 1 rpm to the right = n of output shaft III

### Example 14

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel I.1 = 999 x 2 = 1,998 rpm to the right so that output shaft II 1,998 ö 2 = 999 rpm to the left = A, but eccentric wheel I.1 also circulates to the right at 1,000 rpm = B

The resultant of A and B = 1 rpm to the right = n of output shaft III

In the exemplary embodiments shown in Fig. 108 and Fig. 109, eccentric wheel I.1 rotates oppositely with respect to the rotation of the input shaft I as a result of the internal treads. The examples 8-14 also show that, also in these exemplary embodiments, the rotational speed and the direction of rotation of the output shaft III are the same as the rotational speed and direction of rotation of the input shaft II.

An additional advantage of the eccentric wheels can be seen in two functions that the eccentric wheels have.

A first function is forming a 'rolling lock' between tread 9 and tread 25, connected by the eccentric wheel I.1 in a ratio of 1 : 1. Multiple eccentric wheels can be seen as a cage comprising both surfaces 9 and 25 and fixes them with respect to each other. Then, the 'bars' of the cage are the eccentric wheels (pinions) which can each rotate freely about their own axis. The cage is part of I and is driven by the main motor which is connected with I. If nothing else happens now, the main motor cannot exert any force on the output shaft III.

A second function is that of 'rigid coupling in axial direction' for passing the torque of the main motor on to the shaft III. In order to make this possible, the (servo) drive of input shaft II can be used. The output shaft III starts to rotate along with the input (servo) shaft II and leaves its neutral situation. The total drive power and torque are provided by the main motor if the (servo)motor is fed by the main motor via a power splitter. The total drive power and torque can also be formed from the main motor, for instance a diesel engine, and an extra power source such as for instance one or more electric motors as a (servo) drive of the input shaft II.

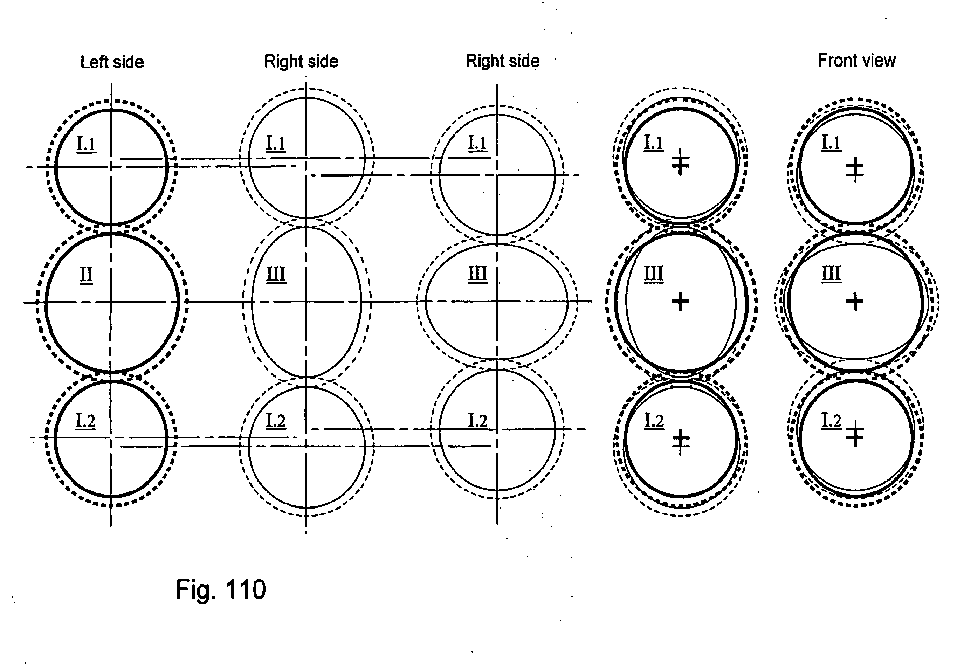

Fig. 110 illustrates an embodiment in which a 1 : 1 transmission ratio is met, but where the shafts II and III have different diameters at the revolving surfaces with the wheels I.1-I.n. In this exemplary embodiment, the output shaft III then has an elliptic shape. The positions of the centerlines of the eccentric wheels I.1-I.n at the location of shaft III differ from the positions of the centerlines at the location of the shaft II. The right side of the eccentric wheel is the side of the output shaft III, and the left side of the eccentric wheel is the side of the input shaft II. Fig. 110 shows a side elevational view of the left side of the eccentric wheel, the right side in the highest position, the right side in the lowest position, and further a front view with the right side in the highest position and a front view with the right side in the lowest position.

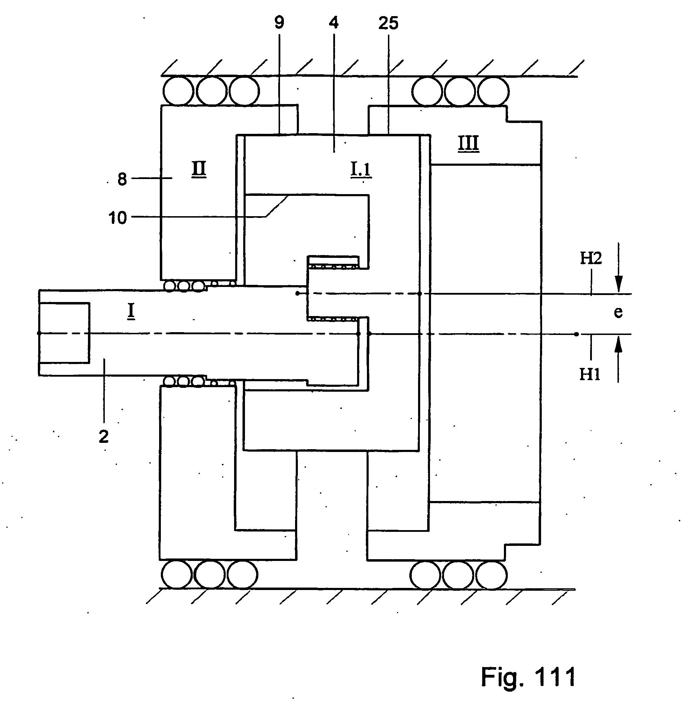

Fig. 111 shows an exemplary embodiment in which a central opening has been made in output shaft III. This makes the eccentric wheel I.1 accessible for a second output shaft. This second output shaft then moves through the eccentric path with which the wheel I.1 rotates about the centerline H1 of the input shaft I. So, so many eccentric output shafts can be used that there are eccentric wheels, in addition to the central output shaft III. This applies to, for instance, mixing or stirring actions.

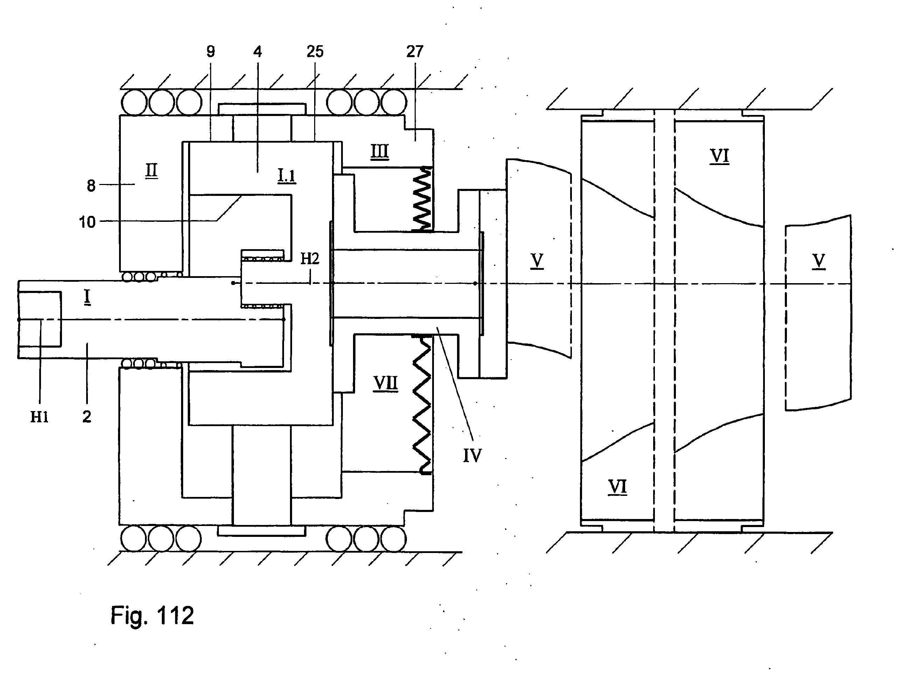

Fig. 112 shows an exemplary embodiment in which such an eccentric output shaft IV is provided. This variator may also be used as, for instance, a pump. Fig. 112 also shows the starting stub of the pump rotor V, the input of the stator VI, the output of the stator VI and the end stub of the rotor V. VII shows a sealing membrane.

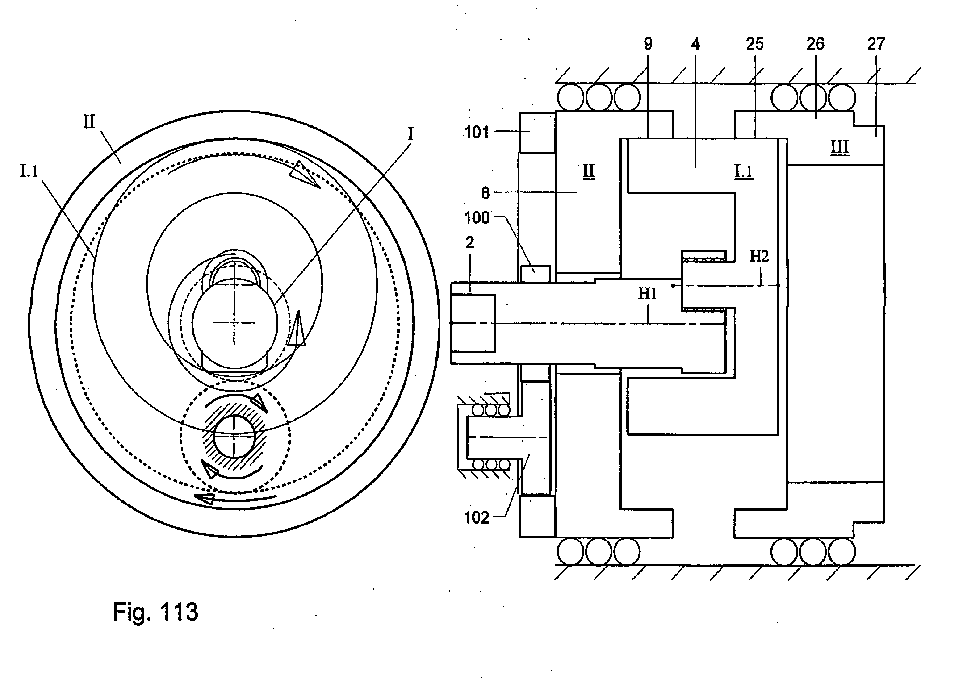

Fig. 113 also shows a variator with a central opening in output shaft III. However, this embodiment is provided with a replacement of the external servo drive of the second input shaft II. With one revolution of I, I.1 makes more than one revolution around its own axis H2, namely in the ratio of diameter II ö diameter I.1. In order to also obtain one rotation of a wheel I.1 for one revolution of the rotor I, a (servo)motor can compensate for this in order to still obtain a 1 : 1 ratio between II and I.1. Because this is desired as a fixed condition, the (servo)motor with fittings and control may optionally be omitted and be replaced by a less expensive fixed drive from the input shaft I to the second input shaft II. To this end, the first input shaft I is provided with a toothed ring 100 and the second input shaft with a toothed ring 101. Between the two treads of 100 and 101, there is a freely rotating pinion 102, which is bearing-mounted in a foundation or a housing of the transmission. The variety of diameters makes it possible that the above-mentioned compensation can be realized for any pump eccentricity. If, for instance, an eccentric (auxiliary) agitating gear is driven, then the servomotor can be used as a drive of the second input shaft II, so that the agitating gear can rotate at a variable speed with respect to the first shaft I and the output shaft III. Further, the output shaft III itself may, for instance, also be an agitating gear. Also, more than one eccentric (auxiliary) agitating gear may be driven.

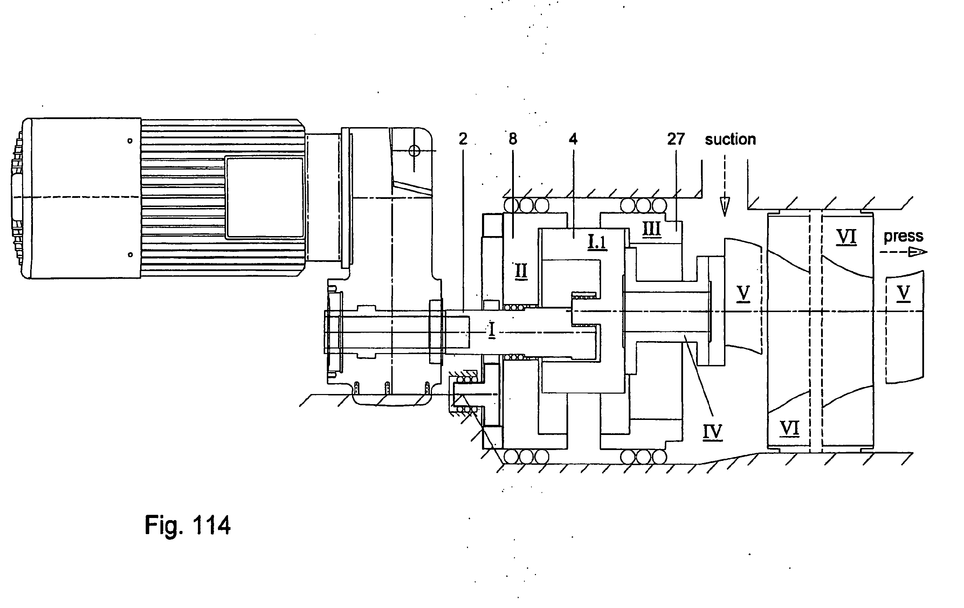

Fig. 114 shows a transmission with a drive motor of the first input shaft I and an eccentric output shaft IV. By designing the rotor as in the exemplary embodiment of Fig. 114, the rotor movement is not caused by the stator, but is created 'autonomously' from the rotor drive. The autonomous rotor movement provides a contactless operation of the rotor within the stator with the result that, with little play with respect to each other, the rotor and the stator form the axially progressively moving cavities in which gas and air are contactlessly - and in a dry-running manner - pumpable.

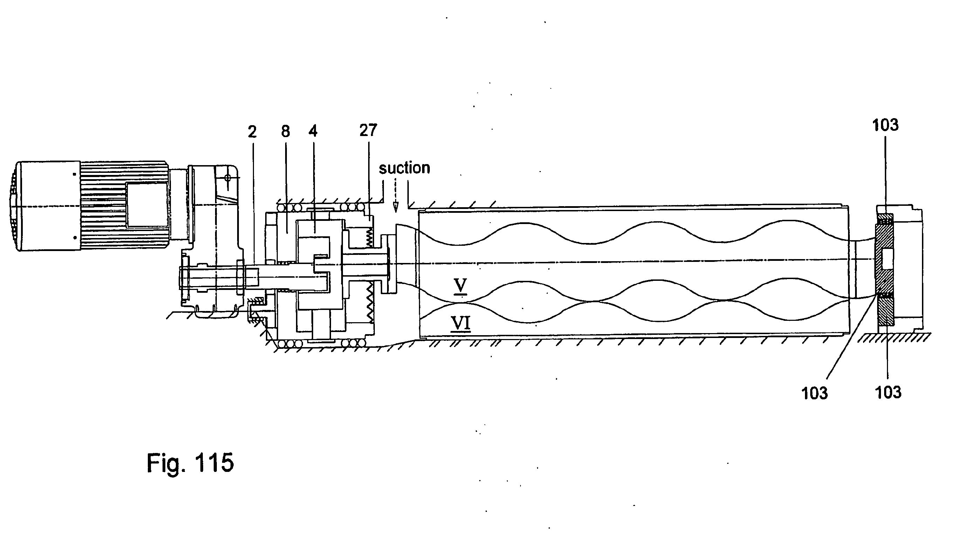

Fig. 115 shows a complete pump, provided with a transmission according to the invention. The auxiliary provision 103 is a demountable suspension bearing for the rotor for preventing sagging of the rotor.

A transmission according to the invention can output both a variable and a fixed rotational speed. Further, it is possible to couple more than one output shaft to the transmission. These output shafts move with respect to one another at either a fixed or a variable rotational speed.

It will be clear that the invention is not limited to the exemplary embodiments shown herein, but that many variations are possible within the scope of the invention as described in the following claims.

## Claims

1. A transmission, comprising a rotary shaft for coupling with a first drive element, provided with a wheel supported eccentrically and freely rotatably on the shaft for coupling with a second drive element, further comprising a ring arranged concentrically and rotatably with respect to the rotary shaft, which ring is provided with a first tread cooperating with the tread of the wheel and a second tread cooperating with the tread of an auxiliary drive element, such that rotation of the rotary shaft results in a corresponding circular revolving movement of the wheel about the centerline of the rotary shaft, while rotation of the wheel about its own axis depends on the rotation of the rotary shaft and on the rotation of the ring about the centerline of the rotary shaft.

2. A transmission according to the preceding claim, wherein the wheel further cooperates with a tread of an auxiliary ring arranged concentrically with the rotary shaft in a same transmission ratio as with the ring.

3. A transmission according to claim 2, wherein ring and auxiliary ring are arranged in an axially spaced manner.

4. A transmission according to any one of claims 1-3, wherein the wheel is coupled with the second drive element via an axial continuation.

5. A transmission according to claim 4, wherein the rotary shaft of the second drive element is coaxial with the rotary shaft of the wheel.

6. A transmission according to any one of claims 1-5, wherein an auxiliary ring designed as an end auxiliary ring is provided which supports a further rotary shaft arranged co-parallel with the rotably shaft, which provides the coupling with the second drive element.

7. A transmission according to any one of claims 1-5, wherein the auxiliary ring is designed as an intermediate auxiliary ring which is provided with a further wheel arranged eccentrically and freely rotatably.

8. A transmission according to any one of claims 1-7, wherein the wheel is a, toothed wheel and wherein the ring is a toothed ring with a first toothing cooperating with the toothed wheel and with a second toothing cooperating with a toothing of the auxiliary drive element.

9. A transmission according to any one of claims 1-8, wherein the auxiliary drive element is coupled with the rotary shaft via a transmission.

10. A transmission according to any one of claims 1-8, wherein the auxiliary drive element is coupled with the rotary shaft with a fixed transmission ratio.

11. A transmission according to claim 10, wherein the transmission ratio between auxiliary drive element and rotary shaft is such that one revolution of the rotary shaft results in one revolution of the wheel around its own axis.

12. A transmission according to any one of claims 1-11, wherein the auxiliary drive element is coupled with a servomotor.

13. A transmission according to any one of claims 1-12, wherein, for bearing-mounting the rotating revolving movement, one or more double eccentric bearings are provided which are each built up from a cylindrical first bearing eccentrically received in a cylindrical second bearing.

14. A transmission according to claim 13, wherein, at least with one double eccentric bearing, the surfaces in which the bearings are located are sealed so that a bearing shield is formed.

15. A transmission according to any one of the preceding claims, wherein the wheel is coupled with a rotor which is provided with at least one helical winding extending around a rotor centerline.

16. A transmission according to claim 15, wherein the rotor centerline is arranged running substantially parallel, eccentrically with respect to the centerline of the rotary shaft.

17. A transmission according to claim 16., wherein the rotor is received in a receiving opening of a stator, which receiving opening is provided with at least two helical windings extending substantially parallel, eccentric with respect to the centerline of the rotary shaft, which windings are interconnected via the center area of the stator.

18. A transmission according to claim 17, wherein the pitch of the helical windings of the stator is two times the pitch of the helical windings of the rotor, and wherein the number of helical windings of the stator is one higher than that of the rotor.

19. A transmission according to any one of claims 15-18, wherein rotor and stator are manufactured from relatively stiff material, in particular from steel.

20. A transmission according to any one of claims 5-19, wherein rotor and/or stator is provided with a lining.

21. A transmission according to any one of claims 15-20, wherein the stator has a thin-walled design.

22. A transmission according to claim 21, wherein, on its outer surface, the stator is provided with ribs extending in axial direction.

23. A transmission according to any one of claims 15-22, wherein the diameters of stator and rotor shift along the centerline.

24. A transmission according to claim 23, wherein, at the location of the shift, the stator is provided with a channel opening up into the receiving opening.

25. A transmission according to any one of claims 15-24, wherein the rotor has a hollow design.

26. A transmission according to any one of claims 15-25, wherein the rotary shaft is an input shaft and the rotor is a displacement body of a pump, compressor or mixer.

27. A transmission according to any one of claims 15-25, wherein the rotary shaft is an output shaft and wherein the rotor is a displaced body of a motor.

28. A transmission according to any one of claims 15-27, wherein the end of the rotor coupled with the toothed wheel is received in a double eccentric bearing according to claim 13 or 14.

29. A transmission according to any one of claims 15-28, wherein the free end of the rotor is bearing-mounted in a double eccentric bearing according to claim 13 or 14.

## Patentansprüche

1. Getriebe, umfassend eine rotierende Welle zum Koppeln mit einem ersten Antriebselement, welche mit einem exzentrisch und frei rotierbar an der Welle gelagerten Rad zum Koppeln mit einem zweiten Antriebselement bereitgestellt ist, weiterhin umfassend einen konzentrisch und in Bezug auf die rotierende Welle rotierbar angeordneten Ring, wobei der Ring mit einer ersten Lauffläche versehen ist, welche mit der Lauffläche des Rades zusammenwirkt, und einer zweiten Lauffläche versehen ist, welche mit der Lauffläche eines Hilfsantriebselement zusammenwirkt, so dass Rotation der rotierenden Welle eine entsprechende kreisförmig umlaufende Bewegung des Rades um die Mittelachse der rotierenden Welle bewirkt, während Rotation des Rades um dessen eigene Achse von der Rotation der rotierenden Welle und von der Rotation des Rings um die Mittelachse der rotierenden Welle abhängig ist.

2. Getriebe gemäß dem vorherigen Anspruch, wobei das Rad weiterhin mit der Lauffläche eines Hilfsrings zusammenwirkt, welcher konzentrisch mit der rotierenden Welle in dem gleichen Übersetzungsverhältnis wie mit dem Ring angeordnet ist.

3. Getriebe gemäß Anspruch 2, wobei Ring und Hilfsring auf eine axial beabstandete Weise angeordnet sind.

4. Getriebe gemäß einem der Ansprüche 1 bis 3, wobei das Rad mit dem zweiten Antriebselement über eine axiale Verlängerung gekoppelt ist.

5. Getriebe gemäß Anspruch 4, wobei die rotierende Welle des zweiten Antriebselements koaxial mit der rotierenden Welle des Rads gekoppelt ist.

6. Getriebe gemäß einem der Ansprüche 1 bis 5, wobei ein als ein Endhilfsring gestalteter Hilfsring bereitgestellt ist, welcher eine weitere, koparallel mit der rotierenden Welle angeordnete rotierende Welle trägt, welche das Koppeln mit dem zweiten Antriebselement liefert.

7. Getriebe gemäß einem der Ansprüche 1 bis 5, wobei der Hilfsring als ein Zwischenhilfsring ausgestaltet ist, welcher mit einem weiteren exzentrisch und frei rotierbar angeordneten Rad versehen ist.

8. Getriebe gemäß einem der Ansprüche 1 bis 7, wobei das Rad ein Zahnrad ist und wobei der Ring ein Zahnring mit einer ersten mit dem Zahnrad zusammenwirkenden Verzahnung und mit einer zweiten mit einer Verzahnung des Hilfsantriebselements zusammenwirkenden Verzahnung ist.

9. Getriebe gemäß einem der Ansprüche 1 bis 8, wobei das Hilfsantriebselement mit der rotierenden Welle über ein Getriebe gekoppelt ist.

10. Getriebe gemäß einem der Ansprüche 1 bis 8, wobei das Hilfsantriebselement mit der rotierenden Welle in einem festen Übersetzungsverhältnis gekoppelt ist.

11. Getriebe gemäß Anspruch 10, wobei das Übersetzungsverhältnis zwischen dem Hilfsantriebselement und der rotierenden Welle dergestalt ist, dass eine Umdrehung der rotierenden Welle zu einer Umdrehung des Rades um die eigene Achse führt.

12. Getriebe gemäß einem der Ansprüche 1 bis 11, wobei das Hilfsantriebselement mit einem Servomotor gekoppelt ist.

13. Getriebe gemäß einem der Ansprüche 1 bis 12, wobei für die Lagerfassung des rotierenden Umlaufswerks ein oder mehrere doppelexzentrische Lager bereitgestellt sind, welche jeweils aus einem zylindrischen ersten Lager aufgebaut sind, welches exzentrisch in einem zylinderischen zweiten Lager aufgenommen ist.

14. Getriebe gemäß Anspruch 13, wobei mindestens bei einem doppelexzentrischen Lager die Oberflächen, in welchen sind die Lager befinden, so abgedichtet sind, dass ein Lagerschild gebildet ist.

15. Getriebe gemäß einem der vorherigen Ansprüche, wobei das Rad mit einem Rotor gekoppelt ist, welcher mit mindestens einer sich um eine Rotormittelachse erstreckenden, schraubenförmigen Windung bereitgestellt ist.

16. Getriebe gemäß Anspruch 15, wobei die Rotormittelachse so angeordnet ist, dass sie im Wesentlichen parallel, exzentrisch in Bezug auf die Mittelachse der rotierenden Welle läuft.

17. Getriebe gemäß Anspruch 16, wobei der Rotor in einer Aufnahmeöffnung eines Stators aufgenommen ist, wobei die Aufnahmeöffnung mit mindestens zwei schraubenförmigen Windungen bereitgestellt ist, welche sich im Wesentlichen parallel, exzentrisch in Bezug auf die Mittelachse der rotierenden Welle erstrecken, wobei die Windungen über eine Mittelfläche des Stators miteinander verbunden sind.

18. Getriebe gemäß Anspruch 17, wobei die Steigung der schraubenförmigen Windungen des Stators das Zweifache der Steigung der schraubenförmigen Bindungen des Rotors beträgt und wobei die Anzahl der schraubenförmigen Windungen des Stators um eine höher als die des Rotors ist.

19. Getriebe gemäß einem der Ansprüche 15 bis 18, wobei der Rotor und der Stator aus vergleichsweise steifem Material, insbesondere aus Stahl, hergestellt sind.

20. Getriebe gemäß einem der Ansprüche 5 bis 19, wobei der Rotor und/oder der Stator mit einer Verkleidung bereitgestellt ist.

21. Getriebe gemäß einem der Ansprüche 15 bis 20, wobei der Stator eine dünnwandige Ausgestaltung hat.

22. Getriebe gemäß Anspruch 21, wobei der Stator an dessen äußeren Oberfläche mit Rippen versehen ist, die sich in axialer Richtung erstrecken.

23. Getriebe gemäß einem der Ansprüche 15 bis 22, wobei sich die Durchmesser des Stators und des Rotors entlang der Mittelachse verändern.

24. Getriebe gemäß Anspruch 23, wobei der Stator in der Nähe der Änderung mit einem Kanal versehen ist, welcher sich in der Aufnahmeöffnung öffnet.

25. Getriebe gemäß einem der Ansprüche 15 bis 24, wobei der Rotor eine Hohlform hat.

26. Getriebe gemäß einem der Ansprüche 15 bis 25, wobei die rotierende Welle eine Antriebswelle ist und der Rotor ein Verdrängungskörper einer Pumpe, eines Kompressors oder eines Rührers ist.

27. Getriebe gemäß einem der Ansprüche 15 bis 25, wobei die rotierende Welle eine Antriebswelle ist und wobei der Rotor ein verdrängter Körper eines Motors ist.

28. Getriebe gemäß einem der Ansprüche 15 bis 27, wobei das Ende des mit dem Zahnrad gekoppelten Rotors in einem doppelexzentrischen Lager gemäß Anspruch 13 oder 14 aufgenommen ist.

29. Getriebe gemäß einem der Ansprüche 15 bis 28, wobei das freie Ende des Rotors in einem doppelexzentrischen Lager gemäß Anspruch 13 oder 14 gelagert ist.

## Revendications

1. Transmission, comprenant un arbre rotatif, pour se coupler avec un premier élément d'entraînement, muni d'un roue supportée de manière excentrique et susceptible de tourner librement sur l'arbre pour se coupler avec un deuxième élément d'entraînement, comprenant en outre un anneau, agencé concentriquement et de manière à pouvoir tourner par rapport à l'arbre rotatif, ledit anneau étant muni d'un premier filetage coopérant avec le filetage de la roue, et d'un deuxième filetage coopérant avec le filetage d'un élément d'entraînement auxiliaire, de manière que la rotation de l'arbre rotatif produise un mouvement de rotation circulaire correspondant de la roue autour de l'axe central de l'arbre rotatif, tandis que la rotation de la roue autour de son propre axe dépend de la rotation de l'arbre rotatif et de la rotation de l'anneau autour de l'axe central de l'arbre rotatif.

2. Transmission selon la revendication précédente, dans laquelle la roue coopère en outre avec un filetage d'un anneau auxiliaire, agencé concentriquement à l'arbre rotatif, dans un même rapport de transmission qu'avec l'anneau.

3. Transmission selon la revendication 2, dans laquelle l'anneau et l'anneau auxiliaire sont disposés de manière espacée axialement.

4. Transmission selon l'une quelconque des revendications 1 à 3, dans laquelle la roue est couplée au deuxième élément d'entraînement, via une continuation axiale.

5. Transmission selon la revendication 4, dans laquelle l'arbre rotatif du deuxième élément d'entraînement est coaxial à l'arbre rotatif de la roue.

6. Transmission selon l'une quelconque des revendications 1 à 5, dans laquelle un anneau auxiliaire, désigné comme anneau auxiliaire d'extrémité, est prévu, supportant un autre arbre rotatif, agencé parallèlement à l'arbre rotatif, qui fournit le couplage au deuxième élément d'entraînement.

7. Transmission selon l'une quelconque des revendications 1 à 5, dans laquelle l'anneau auxiliaire désigné comme anneau auxiliaire intermédiaire, muni d'une autre roue, agencée de manière excentrique et susceptible de tourner librement.

8. Transmission selon l'une quelconque des revendications 1 à 7, dans laquelle la roue est une roue dentée et dans laquelle l'anneau est un anneau denté, muni d'une première denture, coopérant avec la roue dentée, et d'une deuxième denture, coopérant avec une denture de l'élément d'entraînement auxiliaire.

9. Transmission selon l'une quelconque des revendications 1 à 8, dans laquelle l'élément d'entraînement auxiliaire est couplé à l'arbre rotatif, via une transmission..

10. Transmission selon l'une quelconque des revendications 1 à 8, dans laquelle l'élément d'entraînement auxiliaire est couplé à l'arbre rotatif, avec un rapport de transmission fixe.

11. Transmission selon la revendication 10, dans laquelle le rapport de transmission, entre l'élément d'entraînement auxiliaire et l'arbre rotatif, est tel qu'une rotation d'un tour de l'arbre rotatif provoque une rotation d'un tour de la roue autour de son propre axe.

12. Transmission selon l'une quelconque des revendications 1 à 11, dans laquelle l'élément d'entraînement auxiliaire est couplé à un servomoteur.

13. Transmission selon l'une quelconque des revendications 1 à 12, dans laquelle, pour monter en paliers le mouvement de révolution rotatif, un ou plusieurs paliers excentriques doubles sont prévus, chacun fait à partir d'un premier roulement cylindrique, logé de manière excentrique dans un deuxième roulement cylindrique.

14. Transmission selon la revendication 13, dans laquelle, au moins avec un palier excentrique double, les surfaces dans lesquelles les roulements sont situés sont scellées hermétiquement, de manière qu'un écran à roulement soit constitué.

15. Transmission selon l'une quelconque des revendications précédentes, dans laquelle la roue est couplée à un rotor, muni d'au moins un enroulement hélicoïdal s'étendant autour d'un axe central de rotor.

16. Transmission selon la revendication 15, dans laquelle l'axe central du rotor est agencé pour rouler sensiblement parallèlement, excentriquement par rapport à l'axe central de l'arbre rotatif.

17. Transmission selon la revendication 16, dans laquelle le rotor est logé dans une ouverture de logement d'un stator, ladite ouverture de logement étant munie d'au moins deux enroulements hélicoïdaux s'étendant sensiblement parallèlement, excentriquement par rapport à l'axe central de l'arbre rotatif, lesdits enroulements étant interconnectés via la zone centrale du stator.

18. Transmission selon la revendication 17, dans laquelle le pas des enroulements hélicoïdaux du stator est de deux fois le pas des enroulements hélicoïdaux du rotor, et dans lequel le nombre d'enroulements hélicoïdaux du stator est supérieur, de un, à celui du rotor.

19. Transmission selon l'une quelconque des revendications 15 à 18, dans laquelle le rotor et le stator sont fabriqué en un matériau relativement rigide, en particulier en acier.

20. Transmission selon l'une quelconque des revendications 5 à 19, dans laquelle le rotor et/ou le stator est munis d'un revêtement.

21. Transmission selon l'une quelconque des revendications 15 à 20, dans laquelle le stator est d'une conception à paroi mince.

22. Transmission selon la revendication 21, dans laquelle, sur sa surface extérieure, le stator est muni de nervures, s'étendant en direction axiale.

23. Transmission selon l'une quelconque des revendications 15 à 22, dans laquelle les diamètres, du stator et du rotor, sont décalés le long de l'axe central.

24. Transmission selon la revendication 23, dans laquelle, à l'emplacement du décalage, le stator est muni d'un canal, débouchant dans l'ouverture de logement.

25. Transmission selon l'une quelconque des revendications 15 à 24, dans laquelle le rotor est d'une conception creuse.

26. Transmission selon l'une quelconque des revendications 15 à 25, dans laquelle l'arbre rotatif est un arbre d'entrée et le rotor est un corps de déplacement d'une pompe, d'un compresseur ou d'un mélangeur.

27. Transmission selon l'une quelconque des revendications 15 à 25, dans laquelle l'arbre rotatif est un arbre de sortie et dans lequel le rotor est un corps déplacé d'un moteur.

28. Transmission selon l'une quelconque des revendications 15 à 27, dans laquelle l'extrémité du rotor couplé à la roue dentée est logée dans un palier excentrique double, selon la revendication 13 ou 14.

29. Transmission selon l'une quelconque des revendications 15 à 28, dans laquelle l'extrémité libre du rotor est montée en palier dans un palier excentrique double selon la revendication 13 ou 14.
